# EUROPÄISCHE PATENTANMELDUNG

(11) **EP 2 724 614 A1**
(43) Veröffentlichungstag der Anmeldung: **30.04.2014**
(21) Anmeldenummer: 12189789.6
(22) Anmeldetag: 24.10.2012
(51) Int. Cl.: A01K 43/00, A23B 5/14, C11D 3/39, C11D 3/20, C11D 1/62, C11D 3/43, C11D 3/48, A01N 37/16

(54) **Verwendung einer Reinigungszusammensetzung, insbesondere zur Desinfektion und/oder Keimreduzierung, von Eiern und Verfahren**

(71) Anmelder: WESSO AG, 91217 Hersbruck (DE)
(72) Erfinder: Wessolek, Heimo, 91224 Pommelsbrunn (DE); Seidel, Yvette, 90409 Nürnberg (DE)
(74) Vertreter: Louis Pöhlau Lohrentz

(57) **Zusammenfassung**

Die Erfindung betrifft die Verwendung einer Zusammensetzung zur Reinigung, insbesondere zur Desinfektion und/oder Keimreduzierung, von Eiern und/oder Vorrichtungen zur Lagerung, Brut und/oder zum Transport von Eiern, wobei die Zusammensetzung: a) Wasser, b) mindestens ein organisches Lösungsmittel, ausgewählt aus aliphatischem Alkohol und/oder aliphatischem Ether, c) mindestens ein Tensid und d1) eine Mischung mindestens einer Peroxidverbindung und mindestens einer Carbonsäure mit 2 bis 6 Kohlenstoffatomen und/oder d2) mindestens eine Peroxycarbonsäure mit 2 bis 6 Kohlenstoffatomen umfasst.

Die Erfindung betrifft ferner ein Verfahren zur Reinigung, insbesondere zur Desinfektion und/oder Keimreduzierung, von Eiern und/oder Vorrichtung zur Lagerung, Brut und/oder zum Transport von Eiern.

## Beschreibung

Die Erfindung betrifft die Verwendung einer Reinigungszusammensetzung zum Reinigen von Eiern und/oder Vorrichtungen zur Lagerung, Brut und/oder zum Transport von Eiern, insbesondere eine Zusammensetzung zur Desinfektion und/oder Keimreduzierung von Eiern und/oder Vorrichtungen zur Lagerung, Brut und/oder zum Transport von Eiern. Die Erfindung betrifft ferner ein Verfahren zur Reinigung, insbesondere zur Desinfektion.

Die Reinigung, insbesondere die Desinfektion und/oder Keimreduzierung, von Eiern und/oder Vorrichtungen zur Lagerung, Brut und/oder zum Transport von Eiern mit Desinfektionsmitteln in Form von Aerosolen spielt in verschiedenen Bereichen der gewerblichen Produktion von Eiern eine Rolle, wie bei der Bereitstellung von Bruteiern, beispielsweise für eine Aufzucht von Muttertieren oder Masthühnern, oder bei der Bereitstellung von Konsumeiern, die zum Verzehr bestimmt sind.

Bei der Geflügelzucht oder auch bei der Aufzucht von Wildvögeln werden die Schale der verwendeten Bruteier mit Desinfektionsmitteln behandelt, um pathogene Keime, die durch die Eierschale ins Innere dringen können, abzutöten oder ihre Zahl zu verringern.

Darüber hinaus kommt die Desinfektion von Eiern mit Desinfektionsmitteln bei der Bereitstellung von Eiern für die Impfstoffherstellung zum Einsatz.

Des Weiteren werden auch Vorrichtungen zur Lagerung, Brut und/oder zum Transport von Eiern mit Reinigungsmitteln, insbesondere Desinfektionsmitteln, behandelt, um eine Wiederverkeimung von bereits desinfizierten Eiern zu verhindern.

Die Kalkschale eines Hühnereis ist zur Sauerstoffversorgung des auszubrütenden Kükens luftdurchlässig. Die Kalkschale ist stabil, um beim Brüten das Gewicht des Huhns aushalten zu können. Die Schale ist dabei gleichzeitig sehr dünn, etwa 0,3 bis 0,4 Millimeter, damit die Küken diese von innen aufpicken können. Auf der Schale befindet sich das Eioberhäutchen (Cuticula), welche die porige Kalkschale abdichtet und das Eindringen von Bakterien im wesentlichen verhindert.

Bei einer Beschädigung des Eioberhäutchens können pathogene Keime durch die porige Kalkschale in das Ei eindringen und sich im Ei vermehren, was beispielsweise zu einem Absterben des Embryos führen kann.

Um eine bakterielle Kontamination von Eiern zu verhindern, werden bei der gewerblichen Produktion von Eiern, insbesondere von Bruteiern, die verwendeten Eier sowie die verwendeten Vorrichtungen zur Lagerung, Brut und/oder zum Transport von Eiern zur Desinfektion begast, in der Regel mit Formaldehyd-haltigen Zusammensetzungen.

Diese Formaldehyd-haltigen Zusammensetzungen weisen jedoch den Nachteil auf, dass Formaldehyd Allergien, Haut-, Atemwegs- oder Augenreizungen verursachen kann. Akute Lebensgefahr, beispielsweise toxisches Lungenödem oder Pneumonie, besteht ab einer Konzentration von 30 ml/m³. Bei chronischer Exposition ist Formaldehyd karzinogen.

Daher dürfen in Europa Formaldehyd-haltige Zusammensetzungen nicht mehr zur Begasung von Eiern sowie von Vorrichtungen zur Lagerung, Brut und/oder zum Transport von Eiern verwendet werden.

Es besteht somit ein Bedarf nach Alternativen zur Verwendung von Formaldehyd-haltigen Zusammensetzungen bei der Desinfektion und/oder Keimreduzierung von Eiern und/oder Vorrichtungen zur Lagerung, Brut und/oder zum Transport von Eiern. Das US-Patent 3,968,250 beschreibt ein Verfahren zur Desinfektion von Geflügeleiern mit einer Zusammensetzung umfassend etwa 0,02% bis etwa 5% Glutaraldehyd und etwa 0,01 % bis etwa 1 % eines ethoxylierten linearen Alkohols.

Die Verwendung von Glutaraldehyd-haltigen Zusammensetzungen weist jedoch den Nachteil auf, dass Glutaraldehyd giftig ist und schwerwiegende Augen-, Nasen-, Hals- und Lungenreizungen, die mit Kopfschmerzen, Benommenheit und Schwindel einhergehen, verursachen kann.

Die WO 95/04126 A1 beschreibt ein Verfahren zum Waschen bzw. Desinfizieren von Eiern mittels einer wässrigen Lösung umfassend ein nichtionisches Tensid, ein amphoteres Tensid und eine organische Persäure.

Es hat sich jedoch nachteiligerweise gezeigt, dass die Wirkung des aus der WO 95/04126 A1 bekannten Desinfektionsmittels nicht lange anhält und es mithin zu einer raschen Reinfektion kommen kann.

Die WO 02/080689 A1 beschreibt ein Verfahren zur Bereitstellung eines desinfizierten, oberflächenbehandelten Eis, das mit einer Schutzschicht umgeben ist. Zur Desinfektion wird eine 2%ige Natriumhypochlorit-Lösung verwendet.

Die Verwendung einer Natriumhypochlorit-Lösung weist jedoch den Nachteil auf, dass Natriumhypochlorit-Lösungen schnell ihre Wirksamkeit verlieren. Darüber hinaus kann es bereits durch Erwärmung oder Sonnenlicht zum Zerfall von Natriumhypochlorit kommen, bei dem unter anderem Chlor, Chlorwasserstoff, Chlordioxid und Sauerstoff freigesetzt werden.

Es ist Aufgabe der vorliegenden Erfindung, ein preisgünstiges Reinigungsmittel, insbesondere Desinfektionsmittel, zur Reinigung, insbesondere zur Verwendung bei der Desinfektion und/oder Keimreduzierung, von Eiern und/oder Vorrichtungen zur Lagerung, Brut und/oder zum Transport von Eiern bereit zu stellen, das in Form eines Aerosols anwendbar ist, eine starke und lang andauernde Wirkung aufweist sowie für Säugetiere und Vögel gering toxisch ist.

Die Aufgabe wird durch Verwendung einer Reinigungszusammensetzung, insbesondere einer Zusammensetzung zur Desinfektion und/oder Keimreduzierung, von Eiern und/oder Vorrichtungen zur Lagerung, Brut und/oder zum Transport von Eiern gelöst, wobei die Zusammensetzung:
a) Wasser
b) mindestens ein organisches Lösungsmittel, ausgewählt aus aliphatischem Alkohol und/oder aliphatischem Ether,
c) mindestens ein Tensid und
d1) eine Mischung mindestens einer Peroxidverbindung und mindestens einer Carbonsäure mit 2 bis 6 Kohlenstoffatomen und/oder
d2) mindestens eine Peroxycarbonsäure mit 2 bis 6 Kohlenstoffatomen, umfasst.

Bevorzugte Ausführungsformen der erfindungsgemäßen Verwendung sind in den abhängigen Ansprüchen 2 bis 14 aufgeführt.

Die Aufgabe wird weiterhin durch ein Verfahren zur Reinigung, insbesondere zur Desinfektion und/oder Keimreduzierung, von Eiern und/oder Vorrichtungen zur Lagerung, Brut und/oder zum Transport von Eiern gelöst, wobei das Verfahren folgenden Schritt umfasst:
A) Aufbringen einer Zusammensetzung auf Eier und/oder Vorrichtungen zur Lagerung, Brut und/oder zum Transport von Eiern, wobei die Zusammensetzung a) Wasser, b) mindestens ein organisches Lösungsmittel, ausgewählt aus aliphatischem Alkohol und/oder aliphatischem Ether, c) mindestens ein Tensid und d1) eine Mischung mindestens einer Peroxidverbindung und mindestens einer Carbonsäure mit 2 bis 6 Kohlenstoffatomen und/oder d2) mindestens eine Peroxycarbonsäure mit 2 bis 6 Kohlenstoffatomen umfasst.

Gemäß einer bevorzugten Ausführungsform enthält die erfindungsgemäß zu verwendende Zusammensetzung folgende Komponenten:
a) Wasser
b) mindestens ein organisches Lösungsmittel, ausgewählt aus aliphatischem Alkohol und/oder aliphatischem Ether,
c) mindestens ein Tensid und
d1) eine Mischung mindestens einer Peroxidverbindung und mindestens einer Carbonsäure mit 2 bis 6 Kohlenstoffatomen.

Die erfindungsgemäß zu verwendende Zusammensetzung weist überraschenderweise bei niedriger Toxizität eine sehr gute und lang anhaltende Wirksamkeit gegen Bakterien, Schimmelpilze, Schimmelpilzsporen und/oder Hefen auf. Aufgrund der geringen Toxizität kann das erfindungsgemäß zu verwendende wässerige Reinigungsmittel, insbesondere Desinfektionsmittel, zur Reinigung, insbesondere zur Desinfektion und/oder Keimreduzierung, bei der Produktion und/oder Verpackung und/oder Lagerung und/oder zum Transport von Eiern, vorzugsweise Bruteiern, eingesetzt werden. Die Reinigung, insbesondere Desinfektion, kann vorteilhafterweise auch in Gegenwart von Säugetieren, insbesondere Menschen, und Vögeln durchgeführt werden.

Das erfindungsgemäß zu verwendende Reinigungsmittel ermöglicht eine effektive Reinigung von Eiern und/oder Vorrichtungen zur Lagerung, Brut und/oder zum Transport von Eiern. So werden beispielsweise Anhaftungen, beispielsweise Erde, Kot, Federn, etc., wirksam entfernt. Insbesondere eignet sich das erfindungsgemäß zu verwendende Reinigungsmittel als Desinfektionsmittel zur Desinfektion von Eiern und/oder Vorrichtungen zur Lagerung, Brut und/oder zum Transport von Eiern. Mithin kann das erfindungsgemäß zu verwendende Reinigungsmittel auch als Desinfektionsmittel bezeichnet werden.

Unter dem Begriff "Eier" werden erfindungsgemäß insbesondere Vogeleier verstanden. Bei einer äußerst bevorzugten Weiterbildung handelt es sich bei den Vogeleiern um Hühnereier oder Wachteleier, insbesondere um Hühnereier. Selbstverständlich kann die erfindungsgemäß zu verwendende Zusammensetzung auch zur Reinigung, insbesondere zur Desinfektion von weiteren Eiern, beispielsweise von Enteneiern oder Straußeneiern, verwendet werden.

Ohne an eine Theorie gebunden zu sein, wird davon ausgegangen, dass die mikrobizide Wirkung von Peroxiden vor allem auf der Oxidation der Zellwand und -membran bzw. deren Bestandteile beruht, die durch die Zugabe von aliphatischen Ethern und/oder Alkoholen sowie einer schwachen organischen Säure synergistisch verstärkt wird. Es wird vermutet, dass die aliphatischen Ether und/oder Alkohole eine strukturelle Auflockerung und Desintegration der Lipidmembranen, Sporenkapsel und Zellwand bewirken und die schwache organische Säure die Peroxidverbindung stabilisiert. Dies bewirkt vermutlich eine verlängerte Aktivität des wässerigen Reinigungsmittels, insbesondere wässerigen Desinfektionsmittels, auch nach einem Ausbringen als Aerosol. Somit können in einem erfindungsgemäß zu verwendenden antimikrobiellen Aerosol, das über Stunden bis zu mehreren Tagen wirksam ist, diese Stoffe in überraschend niedrigen Konzentrationen eine sehr gute und lang andauernde Reinigungswirkung, insbesondere Desinfektionswirkung, gewährleisten.

Darüber hinaus hat das erfindungsgemäß zu verwendende wässerige Reinigungsmittel, insbesondere wässerige Desinfektionsmittel, keine negativen Einflüsse auf die Schlupffähigkeit und das gleichmäßige Schlüpfen von Küken aus den behandelten Eiern, vorzugsweise Bruteiern.

Die erfindungsgemäß bevorzugt verwendete Zusammensetzung umfasst Wasser, maximal 10 Gew.-% mindestens einer Peroxidverbindung, mindestens ein organisches Lösungsmittel, ausgewählt aus aliphatischem Alkohol und/oder aliphatischem Ether, maximal 5 Gew.-% mindestens einer Carbonsäure mit 2 bis 6 Kohlenstoffatomen und maximal 5 Gew.-% mindestens eines Tensids, jeweils bezogen auf das Gesamtgewicht des wässerigen Reinigungsmittels, insbesondere des wässerigen Desinfektionsmittels, und weist eine hervorragende Langzeitstabilisierung und Langzeitwirkung auf.

Die erfindungsgemäße Zusammensetzung kann dabei als Konzentrat oder nach Verdünnung mit Wasser als Anwendungslösung vorliegen. Gemäß einer bevorzugten Variante der Erfindung ist das Konzentrat vierfach bis zweifach, weiter bevorzugt dreifach konzentriert, jeweils bezogen auf die einfach konzentrierte Anwendungslösung. Eine dreifache Konzentration des Konzentrats, bezogen auf die Anwendungslösung, hat sich als sehr geeignet erwiesen.

Bei einer bevorzugten Ausführungsform umfasst die erfindungsgemäß zu verwendende Zusammensetzung:
a) Wasser,
b) 0,01 bis 30 Gew.-%, vorzugsweise von 3 bis 24 Gew.-%, mindestens eines organischen Lösungsmittels, ausgewählt aus aliphatischem Alkohol und/oder aliphatischem Ether,
c) 0,01 bis 5 Gew.-%, vorzugsweise von 0,3 bis 2,5 Gew.-%, mindestens eines Tensides, vorzugsweise kationischen Tensides, und
d) 0,001 bis 10 Gew.-%, vorzugsweise von 2 bis 7,5 Gew.-%, mindestens einer Peroxidverbindung und von 0,00001 bis 5 Gew.-%, vorzugsweise 0,5 bis 3,6 Gew.-%, mindestens einer Carbonsäure mit 2 bis 6 Kohlenstoffatomen, sowie
e) optional wenigstens einen Duftstoff, jeweils bezogen auf das Gesamtgewicht der Zusammensetzung, wobei die Summe sämtlicher Gewichtsangaben 100 Gew.-% ist.

Gemäß einer weiteren bevorzugten Ausführungsform besteht die erfindungsgemäß zu verwendende Zusammensetzung aus den vorstehenden Komponenten.

Bei einer weiteren bevorzugten Ausführungsform umfasst die erfindungsgemäß zu verwendende Zusammensetzung neben Wasser und dem organischen Lösungsmittel mindestens eine Peroxidverbindung in einer Konzentration von maximal 5 Gew.-% und mindestens eine Carbonsäure mit 2 bis 6 Kohlenstoffatomen in einer Konzentration von maximal 2,5 Gew.-%, jeweils bezogen auf das Gesamtgewicht der Zusammensetzung.

Bei einer weiteren bevorzugten Ausführungsform wird die mindestens eine Peroxidverbindung aus der Gruppe, die aus Alkaliperoxid, Erdalkaliperoxid, Wasserstoffperoxid, Peroxysäuren, Perboraten, Perphosphaten, Percarbonaten, Persilikaten, Persulfaten und Mischungen davon besteht, ausgewählt.

Weiter bevorzugt ist die mindestens eine Peroxidverbindung eine flüchtige und vorzugsweise flüssige Peroxidverbindung, weiter bevorzugt Wasserstoffperoxid oder eine Peroxysäure, vorzugsweise organische Peroxycarbonsäure mit 2 bis 6 Kohlenstoffatomen.

Die erfindungsgemäß zu verwendende Zusammensetzung kann mehr als eine Peroxidverbindung, vorzugsweise 2, 3 oder 4 verschiedene Peroxidverbindungen enthalten, wobei jedoch der Gesamtgehalt an Peroxidverbindung eine Konzentration von maximal 10 Gew.-%, vorzugsweise von maximal 8 Gew.-%, jeweils bezogen auf das Gesamtgewicht der Zusammensetzung, nicht übersteigt.

Bei einer weiteren bevorzugten Ausführungsform umfasst die erfindungsgemäß zu verwendende Zusammensetzung mindestens eine Peroxidverbindung in einer Konzentration von 0,001 bis 10 Gew.-%, weiter bevorzugt von 0,009 bis 9 Gew.-%, weiter bevorzugt von 1,0 bis 8 Gew.-%, noch weiter bevorzugt von 2,0 bis 7,5 Gew.-%, jeweils bezogen auf das Gesamtgewicht der Zusammensetzung.

Bei einer bevorzugten Ausführungsform wird Wasserstoffperoxid eingesetzt. Vorzugsweise ist das Wasserstoffperoxid nur zu einem geringen Grad stabilisiert. Vorzugsweise enthält das Wasserstoffperoxid weniger als 1 Gew.-% Phosphorsäure und/oder andere Stabilisatoren, jeweils bezogen auf das Gesamtgewicht des Wasserstoffperoxids bzw. der Wasserstoffperoxidlösung. Weiter bevorzugt enthält das Wasserstoffperoxid oder die Wasserstoffperoxidlösung weniger als 0,01 Gew.-% Phosphorsäure und/oder andere Stabilisatoren, jeweils bezogen auf das Gesamtgewicht des Wasserstoffperoxids oder der Wasserstoffperoxidlösung, wobei vorzugsweise die Gesamtgehalt an Peroxidverbindungen der erfindungsgemäß zu verwendenden Zusammensetzung in einem Bereich von 0,001 bis 10 Gew.-%, weiter bevorzugt von 0,009 bis 9 Gew.-%, weiter bevorzugt von 1,0 bis 8 Gew.-%, noch weiter bevorzugt von 2,0 bis 7,5 Gew.-%, jeweils bezogen auf das Gesamtgewicht der Zusammensetzung, liegt.

Vorzugsweise liegt die Konzentration des in der erfindungsgemäß zu verwendenden Zusammensetzung enthaltenen Wasserstoffperoxid in einem Bereich von 0,001 bis 10 Gew.-%, weiter bevorzugt von 0,009 bis 9 Gew.-%, weiter bevorzugt von 1,0 bis 8 Gew.-%, noch weiter bevorzugt von 2,0 bis 7,5 Gew.-%, jeweils bezogen auf das Gesamtgewicht der Zusammensetzung, vorzugsweise mit der Maßgabe, dass der Gesamtgehalt an Peroxidverbindungen der erfindungsgemäß zu verwendenden Zusammensetzung in einem Bereich von 0,001 bis 10 Gew.-%, weiter bevorzugt von 0,009 bis 9 Gew.-%, weiter bevorzugt von 1,0 bis 8 Gew.-%, noch weiter bevorzugt von 2,0 bis 7,5 Gew.-%, jeweils bezogen auf das Gesamtgewicht der Zusammensetzung, liegt.

Bei einer weiteren bevorzugten Ausführungsform umfasst die erfindungsgemäß zu verwendende Zusammensetzung mindestens ein organisches Lösungsmittel, ausgewählt aus aliphatischem Alkohol, aliphatischem Ether oder Mischungen davon, in einer Konzentration aus einem Bereich von 0,01 bis 30 Gew.-%, weiter bevorzugt von 3 bis 24 Gew.-%, weiter bevorzugt von 4 bis 18 Gew.-%, noch weiter bevorzugt von 6 bis 12 Gew.-%, jeweils bezogen auf das Gesamtgewicht der Zusammensetzung.

Bei einer Ausführungsform umfasst die erfindungsgemäß zu verwendende Zusammensetzung ein organisches Lösungsmittel ausgewählt aus der Gruppe, bestehend aus Glycerin, Ethylenglykol, Propylenglykol, Diethylenglykol, Monomethyletherdipropylenglykol, Methanol, Ethanol, 1-Propanol, Isopropanol, Glykolether und Mischungen davon. Weiter bevorzugt ist Propylenglykol 1,2-Propylenglykol, 1,3-Propylenglykol oder eine Mischung davon.

Als Ether oder Glykolether sind beispielsweise Diethylether, 2-Methoxyethanol, 2-Ethoxyethanol, 2-Propoxyethanol, 2-Isopropoxyethanol, 2-Butoxyethanol, 2-(2-Ethoxyethoxy)ethanol, 2-(2-Butoxyethoxy)ethanol, Dimethoxyethan, Diethoxyethan, Dibutoxyethan oder Mischungen davon geeignet.

Vorzugsweise liegt die Konzentration des mindestens einen organischen Lösungsmittels, das aus der Gruppe, die aus Glycerin, Ethylenglykol, 1,2-Propylenglykol, 1,3-Propylenglykol, Diethylenglykol, Monomethyletherdipropylenglykol, Methanol, Ethanol, 1-Propanol, Isopropanol, Diethylether, 2-Methoxyethanol, 2-Ethoxyethanol, 2-Propoxyethanol, 2-Isopropoxyethanol, 2-Butoxyethanol, 2-(2-Ethoxyethoxy)ethanol, 2-(2-Butoxyethoxy)ethanol, Dimethoxyethan, Diethoxyethan, Dibutoxyethan und Mischungen davon besteht, ausgewählt wird, in einem Bereich von 0,01 bis 30 Gew.-%, weiter bevorzugt von 3 bis 24 Gew.-%, weiter bevorzugt von 4 bis 18 Gew.-%, noch weiter bevorzugt von 6 bis 12 Gew.-%, jeweils bezogen auf das Gesamtgewicht der Zusammensetzung, vorzugsweise mit der Maßgabe, dass der Gesamtgehalt an organischen Lösungsmitteln, ausgewählt aus aliphatischem Alkohol und/oder aliphatischem Ether, der erfindungsgemäß zu verwendenden Zusammensetzung in einem Bereich von 0,01 bis 30 Gew.-%, weiter bevorzugt von 3 bis 24 Gew.-%, weiter bevorzugt von 4 bis 18 Gew.-%, noch weiter bevorzugt von 6 bis 12 Gew.-%, jeweils bezogen auf das Gesamtgewicht der Zusammensetzung, liegt.

Bei einer weiteren bevorzugten Ausführungsform umfasst die erfindungsgemäß zu verwendende Zusammensetzung mindestens ein organisches Lösungsmittel, wobei das organische Lösungsmittel wenigstens ein aliphatischer, linearer oder verzweigter Alkohol mit 1 bis 4 Kohlenstoffatomen, vorzugsweise mit 2 oder 3 Kohlenstoffatomen, ist.

Weiter bevorzugt wird das mindestens eine organische Lösungsmittel aus der Gruppe, die aus Ethanol, 1-Propanol, 2-Propanol und Mischungen davon besteht, ausgewählt.

Bei einer weiteren bevorzugten Ausführungsform umfasst die erfindungsgemäß zu verwendende Zusammensetzung 1 organisches Lösungsmittel in einer Konzentration von 0,01 bis 30 Gew.-%, weiter bevorzugt von 3 bis 24 Gew.-%, weiter bevorzugt von 5 bis 18 Gew.-%, noch weiter bevorzugt von 6 bis 12 Gew.-%, jeweils bezogen auf das Gesamtgewicht der Zusammensetzung.

Bei einer weiteren bevorzugten Ausführungsform umfasst die erfindungsgemäß zu verwendende Zusammensetzung mindestens zwei organische Lösungsmittel, vorzugsweise zwei organische Lösungsmittel, die vorzugsweise aus der Gruppe, die aus Ethanol, 1-Propanol und 2-Propanol besteht, ausgewählt werden, vorzugsweise in einer Konzentration von 0,01 bis 30 Gew.-%, weiter bevorzugt von 3 bis 24 Gew.-%, weiter bevorzugt von 4 bis 18 Gew.-%, noch weiter bevorzugt von 6 bis 12 Gew.-%, jeweils bezogen auf das Gesamtgewicht der Zusammensetzung. Bei zwei organischen Lösungsmitteln beträgt das Verhältnis der beiden Lösungsmittel zwischen 10:1 bis 1:10, weiter bevorzugt 5:1 bis 1:5, noch weiter bevorzugt 1:1, jeweils bezogen auf die Gewichtsteile.

Die erfindungsgemäß zu verwendende Zusammensetzung kann mehr als ein organisches Lösungsmittel, vorzugsweise 2, 3, 4, 5 oder 6 verschiedene organische Lösungsmittel, enthalten, wobei jedoch der Gesamtgehalt der organischen Lösungsmittel maximal 30 Gew.-%, vorzugsweise von maximal 24 Gew.-%, weiter bevorzugt von 18 Gew.-%, noch weiter bevorzugt von 12 Gew.-%, jeweils bezogen auf das Gesamtgewicht der Zusammensetzung, nicht übersteigt.

Bei einer weiteren bevorzugten Ausführungsform der erfindungsgemäß zu verwendenden Zusammensetzung wird die mindestens eine Carbonsäure mit 2 bis 6 Kohlenstoffatomen aus der Gruppe, die aus gesättigten Monocarbonsäuren mit 2 bis 6 Kohlenstoffatomen, gesättigten Dicarbonsäuren mit 2 bis 6 Kohlenstoffatomen und Mischungen davon besteht, ausgewählt, wobei die Carbonsäuren jeweils unsubstituiert oder mit Hydroxyl-Gruppen substituiert sein können.

Vorzugsweise umfasst die erfindungsgemäß zu verwendende Zusammensetzung mindestens eine, vorzugsweise 1, Carbonsäure mit 2 bis 6 Kohlenstoffatomen in einer Konzentration aus einem Bereich von 0,00001 bis 5 Gew.-%, weiter bevorzugt von 0,5 bis 4 Gew.-%, weiter bevorzugt von 0,8 bis 3,6 Gew.-%, noch weiter bevorzugt von 0,9 bis 1,0 Gew.-%, jeweils bezogen auf das Gesamtgewicht der Zusammensetzung.

Bei einer weiter bevorzugten Ausführungsform der erfindungsgemäß zu verwendenden Zusammensetzung wird die mindestens eine Carbonsäure mit 2 bis 6 Kohlenstoffatomen aus der Gruppe, die aus Essigsäure, Propionsäure, Glykolsäure, Brenztraubensäure, Milchsäure, Malonsäure, Bernsteinsäure, Adipinsäure, Apfelsäure, Weinsäure und Mischungen davon, weiter bevorzugt aus Essigsäure, Propionsäure, Glykolsäure, Milchsäure, Essigsäure und Mischungen davon, weiter bevorzugt Essigsäure, Propionsäure, Milchsäure und Mischungen davon, weiter bevorzugt Essigsäure besteht, ausgewählt, wobei vorzugsweise der Gesamtgehalt an Carbonsäuren mit 2 bis 6 Kohlenstoffatomen der erfindungsgemäß zu verwendenden Zusammensetzung in einem Bereich von 0,001 bis 10 Gew.-%, weiter bevorzugt von 0,009 bis 9 Gew.-%, weiter bevorzugt von 1,0 bis 8 Gew.-%, noch weiter bevorzugt von 2,0 bis 7,5 Gew.-%, jeweils bezogen auf das Gesamtgewicht der Zusammensetzung, liegt.

Vorzugsweise liegt die Konzentration der mindestens einen Carbonsäure mit 2 bis 6 Kohlenstoffatomen, die vorzugsweise aus der Gruppe, die aus Essigsäure, Propionsäure, Glykolsäure, Brenztraubensäure, Milchsäure, Malonsäure, Bernsteinsäure, Adipinsäure, Apfelsäure, Weinsäure und Mischungen davon, weiter bevorzugt aus Essigsäure, Propionsäure, Glykolsäure, Milchsäure, Essigsäure und Mischungen davon, weiter bevorzugt Essigsäure, Propionsäure, Milchsäure und Mischungen davon, weiter bevorzugt Essigsäure besteht, ausgewählt wird, in einem Bereich von 0,00001 bis 5 Gew.-%, weiter bevorzugt von 0,5 bis 4 Gew.-%, weiter bevorzugt von 0,8 bis 3,6 Gew.-%, noch weiter bevorzugt von 0,9 bis 1,0 Gew.-%, jeweils bezogen auf das Gesamtgewicht der Zusammensetzung, vorzugsweise mit der Maßgabe, dass der Gesamtgehalt an Carbonsäuren mit 2 bis 6 Kohlenstoffatomen der erfindungsgemäß zu verwendenden Zusammensetzung in einem Bereich von 0,001 bis 10 Gew.-%, weiter bevorzugt von 0,009 bis 9 Gew.-%, weiter bevorzugt von 1,0 bis 8 Gew.-%, noch weiter bevorzugt von 2,0 bis 7,5 Gew.-%, jeweils bezogen auf das Gesamtgewicht der Zusammensetzung, liegt.

Bei einer bevorzugten Ausführungsform der erfindungsgemäß zu verwendenden Zusammensetzung umfasst diese weniger als 0,1 Gew.-%, vorzugsweise keine, starke Säure, bezogen auf das Gesamtgewicht der Zusammensetzung. Unter starken Säuren sind vorzugsweise Säuren mit einem pKs-Wert kleiner 1,9 zu verstehen. Starke Säuren sind beispielsweise Schwefelsäure und/oder Salzsäure.

Die Peroxidverbindung und die mindestens eine Carbonsäure mit 2 bis 6 Kohlenstoffatomen können miteinander zu Peroxidverbindungen der Carbonsäure mit 2 bis 6 Kohlenstoffatomen, die als Peroxysäuren bezeichnet werden, in dem wässerigen Reinigungsmittel, insbesondere wässerigen Desinfektionsmittel, reagieren. Alternativ können auch direkt Peroxidverbindungen der mindestens einen Carbonsäure mit 2 bis 6 Kohlenstoffatomen in der erfindungsgemäß zu verwendenden Zusammensetzung eingesetzt werden.

Vorzugsweise kann die erfindungsgemäß zu verwendende Zusammensetzung Peroxyessigsäure, Peroxybrenztraubensäure, Peroxymilchsäure, Peroxypropionsäure enthalten. Insbesondere kann die erfindungsgemäß zu verwendende Zusammensetzung Peroxyessigsäure enthalten.

Gemäß einer weiteren Variante der Erfindung enthält die zu verwendende Zusammensetzung sowohl mindestens eine Peroxidverbindung, vorzugsweise H₂O₂, mindestens eine Carbonsäure, vorzugsweise Essigsäure als auch eine Peroxycarbonsäure, vorzugsweise Peressigsäure.

Die Konzentration der Peroxidverbindung der mindestens einen Carbonsäure mit 2 bis 6 Kohlenstoffatomen kann von 0,000001 bis 0,1 Gew.-%, vorzugsweise von 0,005 bis 0,03 Gew.-%, bezogen auf das Gesamtgewicht der Zusammensetzung, betragen.

Vorzugsweise umfasst die erfindungsgemäße Zusammensetzung als Konzentrat die Komponenten in folgenden Konzentrationen:
12 bis 24 Gew.-%, vorzugsweise 18 Gew.-%, organisches Lösungsmittel, vorzugsweise eines Lösungsmittelgemisches aus Ethanol/Isopropanol, vorzugsweise im Gewichtsverhältnis von 1:1,
1,1 bis 2,2 Gew.-%, vorzugsweise 1,65 Gew.-%, Tensid,
5,0 bis 10,0 Gew.-%, vorzugsweise 7,5 Gew.-% Peroxid, vorzugsweise Wasserstoffperoxid,
1,8 bis 3,6 Gew.-%, vorzugsweise 2,7 Gew.-% Carbonsäure, vorzugsweise Essigsäure,
Rest Wasser (ad 100 Gew.-%).

Der jeweils kleinste Wert entspricht dabei einem zweifachen Konzentrat und der jeweils höchste Wert entspricht dabei einem vierfachen Konzentrat. Bei der bevorzugten Variante handelt es sich um ein Dreifachkonzentrat.

Vorzugsweise umfasst die erfindungsgemäße Zusammensetzung als Anwendungslösung die Komponenten in folgenden Konzentrationen:
4 bis 8 Gew.-%, bevorzugt 6 Gew.-% organisches Lösungsmittel, vorzugsweise eines Lösungsmittelgemisches aus Ethanol/Isopropanol, vorzugsweise im Gewichtsverhältnis von 1:1,
0,3 bis 0,7 Gew.-%, bevorzugt 0,55 Gew.-%, Tensid,
2 bis 3 Gew.-%, bevorzugt 2,5 Gew.-%, Peroxid, vorzugsweise Wasserstoffperoxid,
0,8 bis 1,0 Gew.-% bevorzugt 0,9 Gew.-%, Carbonsäure, vorzugsweise Essigsäure,
Rest Wasser (ad 100 Gew.-%).

Die Angaben in Gew.-% beziehen sich jeweils auf das Gesamtgewicht der jeweiligen Zusammensetzung.

Bei einer bevorzugten Ausführungsform umfasst die erfindungsgemäß zu verwendende Zusammensetzung mindestens ein Tensid, das aus der Gruppe, die aus nichtionischen Tensiden, anionischen Tensiden, kationischen Tensiden, amphoteren Tensiden und Mischungen davon besteht, ausgewählt ist.

Geeignete nichtionische Tensiden enthalten vorzugsweise OH-Gruppen, Ethergruppen oder Kombinationen davon, beispielsweise Ethoxylatgruppen, und sind vorzugsweise mehrfache Alkohole oder Ether oder Kombinationen davon.

Geeignete anionische Tenside enthalten vorzugsweise Carboxylatgruppen, Sulfonatgruppen, Sulfatgruppen oder Kombinationen davon.

Geeignete kationische Tenside enthalten vorzugsweise quartäre Ammonium-Gruppen.

Geeignete amphotere Tenside enthalten meist Carboxylatgruppen und quartäre Ammonium-Gruppen.

Bei einer weiter bevorzugten Ausführungsform umfasst die erfindungsgemäß zu verwendende Zusammensetzung mindestens ein kationisches Tensid.

Vorzugsweise umfasst die erfindungsgemäß zu verwendende Zusammensetzung mindestens ein, vorzugsweise 1, Tensid, das aus der Gruppe, die aus nichtionischen Tensiden, anionischen Tensiden, kationischen Tensiden, amphoteren Tensiden und Mischungen davon, vorzugsweise kationischen Tensiden, besteht, ausgewählt ist, in einer Konzentration aus einem Bereich von 0,01 bis 5 Gew.-%, weiter bevorzugt von 0,1 bis 2,5 Gew.-%, weiter bevorzugt von 0,3 bis 1,9 Gew.-%, noch weiter bevorzugt von 0,4 bis 1,7 Gew.-%, jeweils bezogen auf das Gesamtgewicht der Zusammensetzung.

Gemäß einer bevorzugten Variante der Erfindung enthält die erfindungsgemäß zu verwendende Zusammensetzung nur 1 Tensid, vorzugsweise nur 1 kationisches Tensid.

Gemäß einer weiteren Variante der Erfindung enthält die erfindungsgemäße Zusammensetzung 2 Tenside, vorzugsweise 2 kationische Tenside, die vorzugsweise im Verhältnis von 10:1 bis 1:10, weiter bevorzugt von 5:1 bis 1:5, jeweils bezogen auf die Gewichtsteile, vorliegen.

Vorzugsweise liegt die Gesamtkonzentration an Tensiden, die aus der Gruppe, die aus nichtionischen Tensiden, anionischen Tensiden, kationischen Tensiden, amphoteren Tensiden und Mischungen davon, vorzugsweise kationischen Tensiden, besteht, ausgewählt ist, der erfindungsgemäß zu verwendende Zusammensetzung in einem Bereich von 0,01 bis 5 Gew.-%, weiter bevorzugt von 0,1 bis 2,5 Gew.-%, weiter bevorzugt von 0,3 bis 1,9 Gew.-%, noch weiter bevorzugt von 0,4 bis 1,7 Gew.-%, jeweils bezogen auf das Gesamtgewicht der Zusammensetzung.

Bei einer weiteren bevorzugten Ausführungsform umfasst die erfindungsgemäß zu verwendende Zusammensetzung mindestens ein kationisches Tensid, vorzugsweise 1 kationisches Tensid oder 2 kationische Tenside, wobei das mindestens eine kationische Tensid, vorzugsweise 1 kationisches Tensid oder 2 kationische Tenside, eine quartäre Ammoniumverbindung der allgemeinen Formel (1):

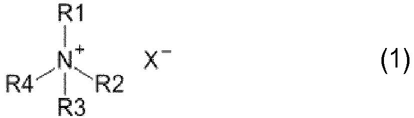

ist oder sind, wobei R1, R2, R3 und R4 jeweils unabhängig voneinander aus der Gruppe, die aus Alkylresten mit 1 bis 20 Kohlenstoffatomen, C1 - C4 Hydroxyalkylresten, die mit Fettsäuren mit 10 bis 20 Kohlenstoffatomen verestert sein können, und Alkylarylresten mit 7 bis 20 Kohlenstoffatomen besteht, ausgewählt ist und wobei X eine Säureanion ist, das vorzugsweise aus der Gruppe, die aus Halogenid, Sulfat und Alkylsulfat mit 1 bis 4 Kohlenstoffatomen besteht, ausgewählt ist.

Vorzugsweise werden die Alkylreste mit 1 bis 20 Kohlenstoffatomen aus der Gruppe, die aus Methyl, Ethyl, n-Propyl, n-Butyl, n-Pentyl, n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl und n-Eicosan besteht, ausgewählt.

Weiter bevorzugt werden die Alkylreste mit 1 bis 20 Kohlenstoffatomen aus der Gruppe, die aus Methyl, n-Octyl, n-Decyl, n-Dodecyl, n-Tetradecyl, n-Hexadecyl, und n-Octadecyl besteht, ausgewählt.

Vorzugsweise werden die C1 - C4 Hydroxyalkylreste aus der Gruppe, die aus Hydroxymethyl, 2-Hydroxyethyl, 3-Hydroxy-n-propyl und 4-Hydroxy-n-butyl besteht, ausgewählt.

Weiter bevorzugt sind die C1 - C4 Hydroxyalkylreste mit Fettsäuren mit 10 bis 20 Kohlenstoffatomen verestert, die vorzugsweise aus der Gruppe, die aus n-Decansäure, n-Undecansäure, n-Dodecansäure, n-Tridecansäure, n-Tetradecansäure, n-Pentadecansäure, n-Hexadecansäure, n-Heptadecansäure, n-Octadecansäure, n-Nonadecansäure und n-Eicosansäure besteht, ausgewählt werden.

Vorzugsweise werden die Alkylarylreste mit 7 bis 20 Kohlenstoffatomen aus der Gruppe, die aus Benzyl, (4-Methylphenyl)methyl und (4-Ethylphenyl)methyl besteht, ausgewählt.

Vorzugsweise liegt die Konzentration der mindestens einen, vorzugsweise 1 oder 2, quartäre(n) Ammoniumverbindung(en) der allgemeinen Formel (1), in einem Bereich von 0,01 bis 5 Gew.-%, weiter bevorzugt von 0,1 bis 2,5 Gew.-%, weiter bevorzugt von 0,3 bis 1,9 Gew.-%, noch weiter bevorzugt von 0,4 bis 1,7 Gew.-%, jeweils bezogen auf das Gesamtgewicht der Zusammensetzung, vorzugsweise mit der Maßgabe, dass die Gesamtkonzentration an Tensiden, die aus der Gruppe, die aus nichtionischen Tensiden, anionischen Tensiden, kationischen Tensiden, amphoteren Tensiden und Mischungen davon, vorzugsweise kationischen Tensiden, besteht, ausgewählt ist, der erfindungsgemäß zu verwendende Zusammensetzung in einem Bereich von 0,01 bis 5 Gew.-%, weiter bevorzugt von 0,1 bis 2,5 Gew.-%, weiter bevorzugt von 0,3 bis 1,9 Gew.-%, noch weiter bevorzugt von 0,4 bis 1,7 Gew.-%, jeweils bezogen auf das Gesamtgewicht der Zusammensetzung, liegt.

Bei einer weiteren bevorzugten Ausführungsform umfasst die erfindungsgemäß zu verwendende Zusammensetzung mindestens ein kationisches Tensid, vorzugsweise 1 kationisches Tensid oder 2 kationische Tenside, wobei das mindestens eine kationische Tensid, vorzugsweise 1 kationisches Tensid oder 2 kationische Tenside, eine quartäre Ammoniumverbindung der allgemeinen Formel (1):

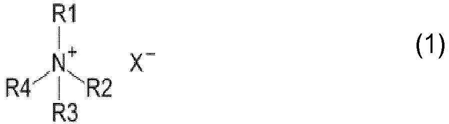

ist oder sind, wobei mindestens R1 und R2 jeweils Methylreste sind und mindestens R3 aus der Gruppe, die aus gradkettigen Alkylresten mit 8 bis 18 Kohlenstoffatomen und Alkylarylresten mit 7 bis 10 Kohlenstoffatomen besteht, ausgewählt ist und wobei X eine Säureanion ist, das vorzugsweise aus der Gruppe, die aus Halogenid, Sulfat und Alkylsulfat mit 1 bis 4 Kohlenstoffatomen besteht, ausgewählt ist.

Vorzugsweise werden die gradkettigen Alkylreste mit 8 bis 18 Kohlenstoffatomen, aus der Gruppe, die aus n-Octyl, n-Decyl, n-Dodecyl, n-Tetradecyl, n-Hexadecyl, und n-Octadecyl besteht, ausgewählt.

Vorzugsweise werden die Alkylarylreste mit 7 bis 20 Kohlenstoffatomen aus der Gruppe, die aus Benzyl, (4-Methylphenyl)methyl und (4-Ethylphenyl)methyl besteht, ausgewählt.

Vorzugsweise liegt die Konzentration der mindestens einen, vorzugsweise 1 oder 2, quartäre(n) Ammoniumverbindung(en) der allgemeinen Formel (1), in einem Bereich von 0,01 bis 5 Gew.-%, weiter bevorzugt von 0,1 bis 2,5 Gew.-%, weiter bevorzugt von 0,3 bis 1,9 Gew.-%, noch weiter bevorzugt von 0,4 bis 1,7 Gew.-%, jeweils bezogen auf das Gesamtgewicht der Zusammensetzung, vorzugsweise mit der Maßgabe, dass die Gesamtkonzentration an Tensiden, die aus der Gruppe, die aus nichtionischen Tensiden, anionischen Tensiden, kationischen Tensiden, amphoteren Tensiden und Mischungen davon, vorzugsweise kationischen Tensiden, besteht, ausgewählt ist, der erfindungsgemäß zu verwendende Zusammensetzung in einem Bereich von 0,01 bis 5 Gew.-%, weiter bevorzugt von 0,1 bis 2,5 Gew.-%, weiter bevorzugt von 0,3 bis 1,9 Gew.-%, noch weiter bevorzugt von 0,4 bis 1,7 Gew.-%, jeweils bezogen auf das Gesamtgewicht der Zusammensetzung, liegt.

Bei einer weiteren bevorzugten Ausführungsform ist eine geeignete quartäre Ammoniumverbindung Benzalkoniumchlorid, das ein Gemisch von Alkylbenzyldimethylammonium-chloriden, deren Alkylteil aus geradkettigen C8- bis C18-Ketten besteht.

Weitere geeignete quartäre Ammoniumverbindung sind beispielsweise bei der Firma TRIGON Chemie GmbH (Schlüchtern, Deutschland) unter der Bezeichnung Pentonium 24 (C12/C14-Alkyldimethylbenzylammoniumchlorid in Wasser), Pentonium 24-80 EG (C12/C14-Alkyldimethylbenzylammoniumchlorid in Wasser /Ethylenglykol), Pentonium DD80 (Didecyldimethylammoniumchlorid in Wasser /Isopropanol), Pentonium OD50 (Dialkyl(C8 - C10)dimethylammoniumchlorid in Wasser) oder Pentonium DQ50 (C12-C18-n-Alkylbenzyldimethylammoniumchlorid und C12/C14-n-Alkyl(ethylbenzyl)dimethylammoniumchlorid in Wasser / Isopropanol) erhältlich.

Vorzugsweise liegt die Konzentration der wenigstens einen quartären Ammoniumverbindung, die vorzugsweise Benzalkoniumchlorid oder eine der oben genannten quartären Ammoniumverbindung oder eine Mischung davon ist, in einem Bereich von 0,01 bis 5 Gew.-%, weiter bevorzugt von 0,1 bis 2,5 Gew.-%, weiter bevorzugt von 0,3 bis 1,9 Gew.-%, noch weiter bevorzugt von 0,4 bis 1,7 Gew.-%, jeweils bezogen auf das Gesamtgewicht der Zusammensetzung, vorzugsweise mit der Maßgabe, dass die Gesamtkonzentration an Tensiden, die aus der Gruppe, die aus nichtionischen Tensiden, anionischen Tensiden, kationischen Tensiden, amphoteren Tensiden und Mischungen davon, vorzugsweise kationischen Tensiden, besteht, ausgewählt ist, der erfindungsgemäß zu verwendende Zusammensetzung in einem Bereich von 0,01 bis 5 Gew.-%, weiter bevorzugt von 0,1 bis 2,5 Gew.-%, weiter bevorzugt von 0,3 bis 1,9 Gew.-%, noch weiter bevorzugt von 0,4 bis 1,7 Gew.-%, jeweils bezogen auf das Gesamtgewicht der Zusammensetzung, liegt.

Bei einer Ausführungsform der erfindungsgemäß zu verwendenden Zusammensetzung umfasst die Zusammensetzung weniger als 1 Gew.-%, vorzugsweise weniger als 0,1 Gew.-%, weiter bevorzugt keine, Stoffe, ausgewählt aus der Gruppe, bestehend aus Mecetroniumetilsulfat, Octenidin, Polyhexamethylenbiguanid, Chlorhexidingluconat, Chlorhexidinacetat, Cetrimid, Cetylpyridiniumchlorid, Hexetidin, Alkylthiuroniumverbindungen, Benzylalkohol, Phenoxyethanol, Phenoxypropanol, Ethylhexylglycerin, Undecylsäure, 2-Biphenol, Triclosan, p-Chlor-m-Xylenol, Thymol, Harnstoff, Benzoesäure, Ozon, Derivate davon und Mischungen davon, jeweils bezogen auf das Gesamtgewicht der Zusammensetzung.

Bei einer bevorzugten Ausführungsform der erfindungsgemäß zu verwendenden Zusammensetzung umfasst die Zusammensetzung keine Chelatisierungsmittel. Bei den Chelatisierungsmitteln, vorzugsweise mit ein- bis zu mehrzähnigen Liganden, die nicht in der erfindungsgemäß zu verwendenden Zusammensetzung enthalten sind, handelt es sich beispielsweise um Zitronensäure, Glycin, Salicylsäure, Asparaginsäure, Glutaminsäure, Picolinsäure, Phthalsäure, Dipicolinsäure, Aminophosphat, EDTA oder Mischungen davon.

Die erfindungsgemäß zu verwendende Zusammensetzung wird zur Reinigung, insbesondere zur Desinfektion und/oder Keimreduzierung, von Eiern und/oder Vorrichtungen zur Lagerung, Brut und/oder zum Transport von Eiern, eingesetzt. Bei den Mikroorganismen kann es sich beispielsweise um Bakterien, Archaea, Mikroalgen, Viren, Protozoen, Hefen, Chlamydien, und/oder Pilze handeln. Dies umfasst insbesondere auch die jeweiligen Sporenformen. Die Bakterien können gram-positiv und/oder gram-negativ sein.

Die erfindungsgemäß zu verwendende Zusammensetzung ist vorzugsweise auch wirksam gegenüber typischen Erregern von Lebensmittelinfektionen und -intoxikationen, wie beispielsweise Campylobacter jejuni, Clostridium perfringens, Escherichia coli 0157:H7, Listeria monocytogenes, Salmonella species, Toxoplasma gondii, Clostridium botulinum, Staphylococcus species, Bacillus cereus und/oder Schimmelpilze, wie Aspergillus flavus, Aspergillus niger und/oder Penicillium species.

Unter dem Begriff "Desinfektion" ist vorzugsweise eine Reduktion der Mikroorganismen um mindestens den Faktor 10⁴ bis 10⁵ zu verstehen. Unter dem Begriff "Keimreduzierung" ist vorzugsweise eine Verringerung der Anzahl der Mikroorganismen in einem Bereich des Faktors 10^{1/2} bis 10³ zu verstehen, besonders bevorzugt von 10^{1/2} bis 10².

Unter dem Begriff "Keimreduzierung" wird verstanden, dass die Anzahl der Keime verringert wird.

Vorzugsweise wird die Reduzierung der Anzahl der Mikroorganismen gemäß Boyce, J.M. und Pittet, D. ("Guidelines for hand hygiene in healthcare settings. Recommendations of the Healthcare Infection Control Practices Advisory Committee and the HIPAC/SHEA/APIC/IDSA Hand Hygiene Task Force", Am.J.Infect.Control 30 (8), 2002, Seite 1 - 46) als log₁₀-Reduktionsfaktor angegeben.

Erfindungsgemäß wird unter dem Begriff "log10-Reduktionsfaktor" die Differenz zwischen dem dekadischen Logarithmus der Anzahl der Mikroorganismen vor und dem dekadischen Logarithmus der Anzahl der Mikroorganismen nach einer Behandlung dieser Mikroorganismen mit einer erfindungsgemäß zu verwendenden Zusammensetzung verstanden.

Geeignete Methoden zur Bestimmung des log₁₀-Reduktionsfaktors sind beispielsweise in der DIN EN 14885:2007-01 "Chemische Desinfektionsmittel und Antiseptika - Anwendung Europäischer Normen für chemische Desinfektionsmittel und Antiseptika" oder in Rabenau, H.F. und Schwebke, I. ("Leitlinie der Deutschen Vereinigung zur Bekämpfung der Viruskrankheiten (DVV) e.V. und des Robert Koch-Instituts (RKI) zur Prüfung von chemischen Desinfektionsmitteln auf Wirksamkeit gegen Viren in der Humanmedizin" Bundesgesundheitsblatt, Gesundheitsforschung, Gesundheitschutz 51 (8), (2008), Seiten 937 - 945) beschrieben.

Vorzugsweise beträgt der log₁₀-Reduktionsfaktor nach einer Behandlung dieser Mikroorganismen mit einer erfindungsgemäß zu verwendenden Zusammensetzung mindestens 2 log₁₀, vorzugsweise mindestens 3 log₁₀, weiter bevorzugt mindestens 4 log₁₀, weiter bevorzugt mindestens 4,5 log₁₀, weiter bevorzugt mindestens 5 log₁₀.

Beispielsweise bedeutet eine Reduktion der Anzahl der Mikroorganismen nach einer Behandlung dieser Mikroorganismen mit einer erfindungsgemäß zu verwendenden Zusammensetzung um 2 Zehnerpotenzen, bezogen auf die Ausgangsmenge dieser Mikroorganismen, einen log₁₀-Reduktionsfaktor von 2 log₁₀.

Weiter bevorzugt wird die Anzahl der Mikroorganismen nach einer Behandlung dieser Mikroorganismen mit einer erfindungsgemäß zu verwendenden Zusammensetzung um mindestens 1 Zehnerpotenz, weiter bevorzugt um mindestens 2 Zehnerpotenzen, vorzugsweise um mindestens 4 Zehnerpotenzen, weiter bevorzugt um mindestens 5 Zehnerpotenzen, jeweils bezogen auf die Ausgangsmenge dieser Mikroorganismen, verringert.

Mit der erfindungsgemäß zu verwendenden Zusammensetzung können Anlagen zur industriellen Produktion von Eiern, Gebäude und Räume zur industriellen Produktion von Eiern, einschließlich der Brut von Eiern, sowie Transportvorrichtungen, wie Lastkraftwagen, Eisenbahnwagons oder Flugzeuge, gereinigt, insbesondere desinfiziert oder deren Keimzahl reduziert werden.

Die erfindungsgemäß zu verwendende Zusammensetzung kann in einem Verfahren zur Reinigung, insbesondere zur Desinfektion und/oder Keimreduzierung, von Eiern und/oder Vorrichtungen zur Lagerung, Brut und/oder zum Transport von Eiern verwendet werden.

Das erfindungsgemäße Verfahren zur Reinigung, insbesondere zur Desinfektion und/oder Keimreduzierung, von Eiern und/oder Vorrichtungen zur Lagerung, Brut und/oder zum Transport von Eiern, umfasst folgenden Schritt:
A) Aufbringen, vorzugsweise vollflächiges Aufbringen, einer Zusammensetzung auf Eier und/oder Vorrichtungen zur Lagerung, Brut und/oder zum Transport von Eiern, wobei die Zusammensetzung a) Wasser b) mindestens ein organisches Lösungsmittel, ausgewählt aus aliphatischem Alkohol und/oder aliphatischem Ether, c) mindestens ein Tensid und d1) eine Mischung mindestens einer Peroxidverbindung und einer Carbonsäure mit 2 bis 6 Kohlenstoffatomen und/oder d2) mindestens eine Peroxycarbonsäure mit 2 bis 6 Kohlenstoffatomen umfasst.

Die erfindungsgemäß zu verwendende Zusammensetzung wird in dem erfindungsgemäßen Verfahren zur Reinigung, vorzugsweise zur oberflächlichen Desinfektion und/oder Keimreduzierung, von Eiern und/oder Vorrichtungen zur Lagerung, Brut und/oder zum Transport von Eiern verwendet.

Die erfindungsgemäß zu verwendende Zusammensetzung kann vorzugsweise in Form eines Aerosols aufgebracht werden, wobei die Tropfengröße in einem Bereich von 5 bis 10 µl liegt. Das Aerosol kann durch Sprühen, Verdüsen, Verdampfen und/oder Kaltvernebelung hergestellt werden. Vorzugsweise wird das Aerosol durch Verdüsen hergestellt.

Dabei kommt vorzugsweise die gesamte Oberfläche der zu reinigenden, insbesondere zu desinfizierenden, Eier und/oder Vorrichtungen zur Lagerung, Brut und/oder zum Transport von Eiern mit der erfindungsgemäß zu verwendenden Zusammensetzung in Kontakt.

Bei dem erfindungsgemäßen Verfahren kann das Aerosol kontinuierlich oder in Intervallen auf die zu reinigenden, insbesondere zu desinfizierenden, Eiern und/oder Vorrichtungen zur Lagerung, Brut und/oder zum Transport von Eiern aufgebracht werden. Dabei liegt die Zeitdauer der Intervalle oder der kontinuierlichen Behandlung in einem Bereich von 1 Minute bis 7 Tagen, vorzugsweise von 15 Minuten bis 1 Tag, weiter bevorzugt von 30 Minuten bis 2 h.

Bei einer bevorzugten Ausführungsform können mehrere zu reinigende, insbesondere zu desinfizierende, Eier auf einer Horde, beispielsweise Schlupfhorde oder Wendehorde, kontinuierlich oder in Intervallen mit der erfindungsgemäß zu verwendenden Zusammensetzung behandelt werden. Die Form und das Material der verwendeten Horde sind dabei nicht wesentlich.

Bei einer weiteren bevorzugten Ausführungsform können die zu reinigenden, insbesondere zu desinfizierenden, Eier auf einem kontinuierlichen Fördersystem, beispielsweise Rollensystem oder Förderband, kontinuierlich oder in Intervallen mit der erfindungsgemäß zu verwendenden Zusammensetzung behandelt werden.

Bei einer bevorzugten Ausführungsform kann die erfindungsgemäß zu verwendende Zusammensetzung zunächst als Konzentrat vorliegen, das erst vor dem Gebrauch mit Wasser verdünnt wird. Gemäß einer besonders bevorzugten Ausführungsform liegt die zu verwendende Zusammensetzung als Konzentrat vor, wobei der Wassergehalt in einem Bereich von 60 bis 80 Gew.-%, weiter bevorzugt von 70 Gew.-%, liegt. Vor der erfindungsgemäßen Verwendung wird Wasser soweit zugegeben, bis die gewünschten Endkonzentration eingestellt sind.

Die nachfolgenden Beispiele und Figuren sollen die vorliegende Erfindung erläutern, aber in keiner Weise beschränken.
Figur 1 zeigt die Wirksamkeit der in Beispiel 1 verwendeten Anwendungslösungen 1.1 bis 1.5 im Vergleich mit Wasser und der Kontrollgruppe ohne Reinigung.
Figur 2 zeigt die Wirksamkeit der in Beispiel 2 verwendeten Anwendungslösungen 2.1 bis 2.5 im Vergleich mit Wasser und der Kontrollgruppe ohne Reinigung.

### Beispiele 1 und 2 sowie Vergleichsbeispiele 3 und 4

### Beispiel 1: Desinfektionslösung mit Ethanol/Isopropanol

Aus dem Konzentrat 1, das die in Tabelle 1 aufgeführte Zusammensetzung aufwies, wurden durch serielle Verdünnung mit Wasser die in Tabelle 2 aufgeführten Anwendungslösungen 1.1 bis 1.5 hergestellt.

**Tabelle 1: Zusammensetzung des verwendeten Konzentrats 1**

| **Inhaltsstoff** | **Konzentration** |
|---|---|
| Wasserstoffperoxid | 7,5 Gew.-% |
| Ethanol (vergällt) | 9,0 Gew.-% |
| Essigsäure | 2,7 Gew.-% |
| Isopropanol | 9,0 Gew.-% |
| PCG 1200 ¹⁾ | 1,35 Gew.-% |
| Pentonium DO 50 ²⁾ | 0,3 Gew.-% |
| Duft (Kiwi Mix) (optional) | 0,06 Gew.-% |
| Wasser | ad 1000 g |

**Tabelle 2: Zusammensetzung der verwendeten Anwendungslösungen 1.1 bis 1.5**

| | **Konzentration (Gew.-%)** | | | | | |
|---|---|---|---|---|---|---|
| **Inhaltsstoff** | **Konzentrat** | **0,10 %** | **1,00 %** | **10,00 %** | **20,00 %** | **30,00 %** |
| Wasserstoffperoxid | 7,5 | 0,0075 | 0,075 | 0,75 | 1,5 | 2,25 |
| Ethanol (vergällt) | 9,0 | 0,009 | 0,09 | 0,9 | 1,8 | 2,7 |
| Essigsäure | 2,7 | 0,0027 | 0,027 | 0,27 | 0,54 | 0,81 |
| Isopropanol | 9,0 | 0,009 | 0,09 | 0,9 | 1,8 | 2,7 |
| PCG 1200 ¹⁾ | 1,35 | 0,00135 | 0,0135 | 0,135 | 0,27 | 0,405 |
| Pentonium DO 50 ²⁾ | 0,3 | 0,0003 | 0,003 | 0,03 | 0,06 | 0,09 |
| Duft (Kiwi Mix) (optional) | 0,06 | 0,00006 | 0,0006 | 0,006 | 0,012 | 0,018 |
| **Anwendungslösung:** | **-** | **1.1** | **1.2** | **1.3** | **1.4** | **1.5** |

| | | | | | | |
|---|---|---|---|---|---|---|
| ¹⁾ PCG 1200: quartäre Ammoniumverbindung 20-40 % Glycolether (Lösungsmittel) 20-40 % Glycol (Lösungsmittel)20-40 % ²⁾ Pentonium DO 50:Dioctyldimethylammoniumchlorid 50 % Ethanol (Lösungsmittel) | | | | | | |

### Beispiel 2: Desinfektionslösung ohne zusätzliche Zugabe von Ethanol/Isopropanol

Aus dem Konzentrat 2, das die in Tabelle 3 aufgeführte Zusammensetzung aufwies, wurden durch serielle Verdünnung mit Wasser die in Tabelle 4 aufgeführten Anwendungslösungen 2.1 bis 2.5 hergestellt.

**Tabelle 3: Zusammensetzung des verwendeten Konzentrats 2:**

| **Inhaltsstoff** | **Konzentration** |
|---|---|
| Wasserstoffperoxid | 7,5 Gew.-% |
| Essigsäure | 2,7 Gew.-% |
| PCG 1200 ¹⁾ | 1,35 Gew.-% |
| Pentonium DO 50 ²⁾ | 0,3 Gew.-% |
| Duft (Kiwi Mix) (optional) | 0,06 Gew.-% |
| Wasser | ad 1000 g |

**Tabelle 4: Zusammensetzung der verwendeten Anwendungslösungen 2.1 bis 2.5:**

| | **Konzentration (Gew.-%)** | | | | | |
|---|---|---|---|---|---|---|
| **Inhaltsstoff** | **Konzentrat** | **0,10 %** | **1,00 %** | **10,00 %** | **20,00 %** | **30,00 %** |
| Wasserstoffperoxid | 7,5 | 0,0075 | 0,075 | 0,75 | 1,5 | 2,25 |
| Essigsäure | 2,7 | 0,0027 | 0,027 | 0,27 | 0,54 | 0,81 |
| PCG 1200 ¹⁾ | 1,35 | 0,00135 | 0,0135 | 0,135 | 0,27 | 0,405 |
| Pentonium DO 50 ²⁾ | 0,3 | 0,0003 | 0,003 | 0,03 | 0,06 | 0,09 |
| Duft (Kiwi Mix) (optional) | 0,06 | 0,00006 | 0,0006 | 0,006 | 0,012 | 0,018 |
| **Anwendungslösung** | **-** | **2.1** | **2.2** | **2.3** | **2.4** | **2.5** |

| | | | | | | |
|---|---|---|---|---|---|---|
| ¹⁾ PCG 1200: quartäre Ammoniumverbindung 20-40 % Glycolether (Lösungsmittel) 20-40 % Glycol (Lösungsmittel) 20-40 % ²⁾ Pentonium DO 50: Dioctyldimethylammoniumchlorid 50 % Ethanol (Lösungsmittel) | | | | | | |

### Durchführung der Reinigung und der Gesamtkeimzahlbestimmung (KBE / cm²)

Jeweils 3 frisch gelegte Eier aus 3 verschiedenen Ställen R, B und G wurden ohne mechanische Vorbehandlung mit jeweils 10 ml der oben angegebenen Anwendungslösungen 1.1 bis 1.5 und 2.1 bis 2.5 sowie mit reinem Wasser ohne weitere Zusätze (Vergleichsbeispiel 3) besprüht.

Anschließend wurden die behandelten Eier mittels eines Gebläsetrockners getrocknet und in separaten Inkubatoren bei 37,5°C und 55 % relativer Luftfeuchtigkeit bebrütet.

Es wurden jeweils vor der Behandlung mit den oben angegebenen Anwendungslösungen sowie mit reinem Wasser und jeweils zu verschiedenen Zeitpunkten (10 Minuten, 60 Minuten, 12 Stunden, 72 Stunden und 6 Tagen) nach der Reinigung Abklatschtests durchgeführt, wobei Envirocheck® Nährbodenträger (Envirocheck® Contact Plates TVC, Merck KGaA, Darmstadt, DE) gemäß den Angaben des Herstellers verwendet wurden.

Als Kontrolle wurden weiterhin unbehandelte Eier (Vergleichsbeispiel 4) mitgeführt, die ohne Desinfektion nach dem Legen der Eier in einen Inkubatoren überführt und bei 37,5°C und 55 % relativer Luftfeuchtigkeit bebrütet wurden.

Die Durchführung der Abklatschtests wurde jeweils mit einem Envirocheck® Nährbodenträger durchgeführt, wobei mit gleichmäßig starkem Druck eine Agarseite des Nährbodenträgers wenige Sekunden gegen die Testfläche gedrückt wurde, ohne dass der Träger über die Testfläche rutschte. Der Vorgang wurde mit der zweiten Agarfläche wiederholt, wobei jeweils eine Testfläche gewählt wurde, die direkt neben der ersten Testfläche lag.

Die verwendeten Nährbodenträger wurden 48 h aufrecht in einem verschlossenen Inkubationsröhrchen bei 35,5°C in einen Brutschrank bebrütet. Anschließend wurden die Kolonien auf jeder Agarseite ausgezählt.

Die Auszählung der Kolonien erfolgte durch einen Vergleich mit einer Auswertetafel, auf der verschiedene koloniebildende Einheiten (KBE) pro cm² Testfläche dargestellt sind und wodurch eine semi-quantitativen Einteilung des Bakterienwachstums möglich ist.

| sehr geringes Wachstum | geringes Wachstum | mäßiges Wachstum | starkes Wachstum | sehr starkes Wachstum |
|---|---|---|---|---|
| 3,5 KBE/cm² | 17 KBE/cm² | 58 KBE/cm² | 140 KBE/cm² | 350 KBE/cm² |

Bei einem sehr starken Wachstum wurde für die weitere Auswertung die Anzahl der Bakterien mit 350 KBE/cm² angenommen.

Die Ergebnisse der Abklatschtests sind in den Tabellen 5a) bis 16a) dargestellt.

Die prozentuale Reduzierung der koloniebildenden Einheiten pro cm² nach einmaliger Behandlung, jeweils bezogen auf die koloniebildenden Einheiten pro cm² vor der Reinigung, sind in den Tabellen 5b) bis 16b) dargestellt.

**Tabelle 5a) Anwendungslösung 1.1 1**

| **Probe** | **KBE / cm²** | | | | | |
|---|---|---|---|---|---|---|
| | **vorher** | **10 min** | **60 min** | **12 Std.** | **72 Std.** | **6 Tage** |
| R1 | >350 | 58 | 3,5-17 | 3,5-17 | 17-58 | 17 |
| R2 | >350 | 17 | <3,5 | 3,5-17 | 3,5-17 | 3,5-17 |
| R3 | >350 | 17 | <3,5 | <3,5 | <3,5 | 3,5-17 |
| | **350** | **30,7** | **5,8** | **23,3** | **16,5** | **12,5** |
| B1 | >350 | 17 | 3,5-17 | 3,5-17 | 58 | 58-140 |
| B2 | >350 | 58 | 3,5-17 | <3,5 | 3,5-17 | 17 |
| B3 | >350 | 17-58 | 3,5-17 | 17-58 | 17-58 | 17-58 |
| | **350** | **51,2** | **10,3** | **16,5** | **35,3** | **51,2** |
| G1 | >350 | 17-58 | 3,5-17 | 17-58 | 17,5-58 | 58 |
| G2 | >350 | 17-58 | 3,5-17 | <3,5 | 3,5-17 | 17-58 |
| G3 | >350 | 17-58 | 3,5-17 | 3,5-17 | 58 | 58 |
| | **350** | **37,5** | **10,3** | **16,5** | **35,3** | **51,2** |
| **gesamt** | **350** | **39,8** | **8,8** | **18,8** | **29,0** | **38,3** |

**Tabelle 5b) Prozentuale Reduzierung der koloniebildenden Einheiten pro cm² nach einmaliger Behandlung mit Anwendungslösung 1.1**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 91,2 | 98,3 | 93,3 | 95,3 | 96,4 |
| B | 85,4 | 97,1 | 95,3 | 89,9 | 85,4 |
| G | 89,3 | 97,1 | 95,3 | 89,9 | 85,4 |
| **gesamt** | **88,6** | **97,5** | **94,6** | **91,7** | **89,1** |

**Tabelle 6a) Anwendungslösung 1.2**

| **Probe** | **KBE / cm²** | | | | | |
|---|---|---|---|---|---|---|
| | **vorher** | **10 min** | **60 min** | **12 Std.** | **72 Std.** | **6 Tage** |
| R4 | >350 | 3,5 | <3,5 | <3,5 | <3,5 | 17 |
| R5 | >350 | 3,5-17 | <3,5 | <3,5 | 3,5-17 | 17-58 |
| R6 | >350 | 3,5-17 | 0 | <3,5 | <3,5 | 3,5-17 |
| | **350** | **8** | **1,2** | **1,8** | **4,6** | **21,6** |
| B4 | >350 | 0 | <3,5 | <3,5 | <3,5 | <3,5 |
| B5 | >350 | <3,5 | 0 | <3,5 | <3,5 | 58 |
| B6 | >350 | <3,5 | <3,5 | <3,5 | <3,5 | 17-58 |
| | **350** | **1,2** | **1,2** | **1,8** | **1,8** | **32,3** |
| G4 | >350 | 3,5-17 | 3,5-17 | 17-58 | 58-140 | 140 |
| G5 | >350 | 17-58 | 3,5-17 | <3,5 | 3,5-17 | 3,5-17 |
| G6 | >350 | 3,5-17 | <3,5 | <3,5 | <3,5 | 3,5-17 |
| | **350** | **19,3** | **7,4** | **13,7** | **37** | **53,5** |
| **gesamt** | **350** | **9,5** | **3,3** | **5,8** | **14,5** | **35,8** |

**Tabelle 6b) Prozentuale Reduzierung der koloniebildenden Einheiten pro cm² nach einmaliger Behandlung mit Anwendungslösung 1.2**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 97,7 | 99,7 | 99,5 | 98,7 | 93,8 |
| B | 99,7 | 99,7 | 99,5 | 99,5 | 90,8 |
| G | 94,5 | 97,9 | 96,1 | 89,4 | 84,7 |
| **gesamt** | **97,3** | **99,1** | **98,4** | **95,9** | **89,8** |

**Tabelle 7a) Anwendungslösung 1.3**

| **Probe** | **KBE / cm²** | | | | | |
|---|---|---|---|---|---|---|
| | **vorher** | **10 min** | **60 min** | **12 Std.** | **72 Std.** | **6 Tage** |
| R7 | >350 | 3,5-17 | 0 | 0 | <3,5 | 17 |
| R8 | >350 | <3,5 | 0 | 0 | <3,5 | 3,5-17 |
| R9 | >350 | 0 | 0 | <3,5 | <3,5 | 3,5-17 |
| | **350** | **0** | **0** | **0,6** | **1,8** | **12,5** |
| B7 | >350 | 0 | 0 | <3,5 | <3,5 | 3,5-17 |
| B8 | >350 | <3,5 | 0 | <3,5 | <3,5 | 3,5-17 |
| B9 | >350 | <3,5 | 0 | 3,5-17 | 3,5-17 | 17 |
| | **350** | **1,2** | **0** | | | **12,5** |
| G7 | >350 | <3,5 | 0 | 0 | <3,5 | <3,5 |
| G8 | >350 | 0 | 0 | 0 | <3,5 | <3,5 |
| G9 | >350 | 0 | 0 | 0 | 0 | 3,5-17 |
| | **350** | **0,6** | **0** | **0** | **1,2** | **4,6** |
| **gesamt** | **350** | **0,6** | **0,0** | **0,2** | **1,0** | **9,9** |

**Tabelle 7b) Prozentuale Reduzierung der koloniebildenden Einheiten pro cm² nach einmaliger Behandlung mit Anwendungslösung 1.3**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 100,0 | 100,0 | 99,8 | 99,5 | 96,4 |
| B | 99,7 | 100,0 | 100,0 | 100,0 | 96,4 |
| G | 99,8 | 100,0 | 100,0 | 99,7 | 98,7 |
| **gesamt** | **99,8** | **100,0** | **99,9** | **99,7** | **97,2** |

**Tabelle 8a) Anwendungslösung 1.4**

| **Probe** | **KBE / cm**² | | | | | |
|---|---|---|---|---|---|---|
| | **vorher** | **10 min** | **60 min** | **12 Std.** | **72 Std.** | **6 Tage** |
| R10 | >350 | 0 | 0 | 0 | 0 | <3,5 |
| R11 | >350 | <3,5 | 0 | 0 | 0 | 3,5-17 |
| R12 | >350 | <3,5 | 0 | 0 | 0 | <3,5 |
| | **350** | **1,2** | **0** | **0** | **0** | **4,6** |
| B10 | >350 | 0 | 0 | 0 | 0 | <3,5 |
| B11 | >350 | 0 | 0 | 0 | 0 | 0 |
| B12 | >350 | <3,5 | 0 | 0 | 0 | 0 |
| | **350** | **0,6** | **0** | **0** | **0** | **0,6** |
| G10 | >350 | 0 | 0 | 0 | 0 | 0 |
| G11 | >350 | 0 | 0 | 0 | 0 | 17-58 |
| G12 | >350 | 0 | 0 | 0 | 0 | 3,5-17 |
| | **350** | **0** | **0** | **0** | **0** | **15,9** |
| **gesamt** | **350** | **0,6** | **0,0** | **0,0** | **0,0** | **7,0** |

**Tabelle 8b) Prozentuale Reduzierung der koloniebildenden Einheiten pro cm² nach einmaliger Behandlung mit Anwendungslösung 1.4**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 99,7 | 100,0 | 100,0 | 100,0 | 98,7 |
| B | 99,8 | 100,0 | 100,0 | 100,0 | 99,8 |
| **G** | 100,0 | 100,0 | 100,0 | 100,0 | 95,5 |
| **gesamt** | **99,8** | **100,0** | **100,0** | **100,0** | **98,0** |

**Tabelle 9a) Anwendungslösung 1.5**

| **Probe** | **KBE / cm²** | | | | | |
|---|---|---|---|---|---|---|
| | **vorher** | **10 min** | **60 min** | **12 Std.** | **72 Std.** | **6 Tage** |
| R13 | >350 | <3,5 | 0 | 0 | 0 | 0 |
| R14 | >350 | 0 | 0 | 0 | 0 | 0 |
| R15 | >350 | 0 | 0 | 0 | 0 | 0 |
| | **350** | **0,6** | **0** | **0** | **0** | **0** |
| B13 | >350 | 0 | 0 | 0 | 0 | 0 |
| B14 | >350 | 0 | 0 | 0 | 0 | 0 |
| B15 | >350 | 0 | 0 | 0 | 0 | <3,5 |
| | **350** | **0** | **0** | **0** | **0** | **0,6** |
| G13 | >350 | 0 | 0 | 0 | 0 | <3,5 |
| G14 | >350 | <3,5 | 0 | 0 | 0 | 0 |
| G15 | >350 | 0 | 0 | <3,5 | 0 | 0 |
| | **350** | **0,6** | **0** | **0,6** | **0** | **0,6** |
| **gesamt** | **350** | **0,4** | **0,0** | **0,2** | **0,0** | **0,4** |

**Tabelle 9b) Prozentuale Reduzierung der koloniebildenden Einheiten pro cm² nach einmaliger Behandlung mit Anwendungslösung 1.5**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 99,8 | 100,0 | 100,0 | 100,0 | 100,0 |
| B | 100,0 | 100,0 | 100,0 | 100,0 | 99,8 |
| G | 99,8 | 100,0 | 99,8 | 100,0 | 99,8 |
| **gesamt** | **99,9** | **100,0** | **99,9** | **100,0** | **99,9** |

**Tabelle 10a) Anwendungslösung 2.1**

| **Probe** | **KBE / cm2** | | | | | |
|---|---|---|---|---|---|---|
| | **vorher** | **10 min** | **60 min** | **12 Std.** | **72 Std.** | **6 Tage** |
| R16 | >350 | 17-58 | 17 | 17 | 17-58 | 58 |
| R17 | >350 | 58-140 | 17-58 | 17 | 17 | 58-140 |
| R18 | >350 | 58-140 | 17 | 17 | 17-58 | 58 |
| | **350** | **78,5** | **23,8** | **17** | **30,7** | **71,7** |
| B16 | >350 | 17-58 | 3,5-17 | 17 | 17-58 | 58 |
| B17 | >350 | 17 | 3,5-17 | 3,5-17 | 17-58 | 58-140 |
| B18 | >350 | 17-58 | 17 | 3,5-17 | 58 | 140-350 |
| | **350** | **30,7** | **12,5** | **12,5** | **44,3** | **134** |
| G16 | >350 | 58-140 | 17-58 | 3,5-17 | 58-140 | 58-140 |
| G17 | >350 | 140-350 | 140-350 | 58-140 | 58-140 | >350 |
| G18 | >350 | 58-140 | 58 | 58-140 | 58-140 | 140-350 |
| | **350** | **147,7** | **113,5** | **104,1** | **99** | **231,3** |
| **gesamt** | **350** | **85,6** | **49,9** | **44,5** | **58,0** | **145,7** |

**Tabelle 10b) Prozentuale Reduzierung der koloniebildenden Einheiten pro cm² nach einmaliger Behandlung mit Anwendungslösung 2.1**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 77,6 | 93,2 | 95,1 | 91,2 | 79,5 |
| B | 91,2 | 96,4 | 96,4 | 87,3 | 61,7 |
| G | 57,8 | 67,6 | 70,3 | 71,7 | 33,9 |
| **gesamt** | **75,5** | **85,7** | **87,3** | **83,4** | **58,4** |

**Tabelle 11a) Anwendungslösung 2.2**

| **Probe** | **KBE / cm2** | | | | | |
|---|---|---|---|---|---|---|
| | **vorher** | **10 min** | **60 min** | **12 Std.** | **72 Std.** | **6 Tage** |
| R19 | >350 | 17 | 3,5-17 | 3,5-17 | 17-58 | 58-140 |
| R20 | >350 | 17 | <3,5 | <3,5 | 17 | >350 |
| R21 | >350 | 17-58 | <3,5 | <3,5 | 17 | 140-350 |
| | **350** | **23,8** | **4,6** | **4,6** | **23,8** | **231,3** |
| B19 | >350 | 3,5-17 | <3,5 | <3,5 | 3,5-17 | 58-140 |
| B20 | >350 | 17 | 3,5-17 | 3,5-17 | 17-58 | 58-140 |
| B21 | >350 | 17-58 | 17 | 3,5-17 | 17-58 | 140 |
| | **350** | **21,6** | **9,7** | **7,4** | **28,4** | **112,7** |
| G19 | >350 | 17-58 | 58 | 17-58 | 58-140 | >350 |
| G20 | >350 | 58-140 | 17-58 | 17-58 | 58 | 140 |
| G21 | >350 | 17 | <3,5 | 3,5-17 | 17-58 | 140-350 |
| | **350** | **51,2** | **32,4** | **28,4** | **64,8** | **245** |
| **gesamt** | **350** | **32,2** | **15,6** | **13,5** | **39,0** | **196,3** |

**Tabelle 11b) Prozentuale Reduzierung der koloniebildenden Einheiten pro cm² nach einmaliger Behandlung mit Anwendungslösung 2.2**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 93,2 | 98,7 | 98,7 | 93,2 | 33,9 |
| B | 93,8 | 97,2 | 97,9 | 91,9 | 67,8 |
| G | 85,4 | 90,7 | 91,9 | 81,5 | 30,0 |
| **gesamt** | **90,8** | **95,6** | **96,2** | **88,9** | **43,9** |

**Tabelle 12a) Anwendungslösung 2.3**

| **Probe** | **KBE / cm2** | | | | | |
|---|---|---|---|---|---|---|
| | **vorher** | **10 min** | **60 min** | **12 Std.** | **72 Std.** | **6 Tage** |
| R22 | >350 | 17 | <3,5 | 3,5-17 | 3,5-17 | 3,5-17 |
| R23 | >350 | 3,5-17 | <3,5 | <3,5 | 3,5-17 | 17-58 |
| R24 | >350 | 3,5-17 | 0 | 0 | <3,5 | 3,5-17 |
| | **350** | **12,5** | **1,2** | **4** | **7,4** | **19,3** |
| B22 | >350 | <3,5 | 0 | <3,5 | <3,5 | 3,5-17 |
| B23 | >350 | 17-58 | 3,5-17 | 3,5-17 | 3,5-17 | 17-58 |
| B24 | >350 | 3,5-17 | <3,5 | 3,5-17 | 17-58 | 58 |
| | **350** | **16,5** | **4** | **7,4** | **16,5** | **35,3** |
| G22 | >350 | 17 | 3,5-17 | 3,5-17 | 3,5-17 | 3,5-17 |
| G23 | >350 | 3,5-17 | 0 | 0 | 0 | <3,5 |
| G24 | >350 | <3,5 | 0 | <3,5 | 58 | 58 |
| | **350** | **9,7** | **3,4** | **4** | **22,8** | **23,3** |
| **gesamt** | **350** | **12,9** | **2,9** | **5,1** | **15,6** | **26,0** |

**Tabelle 12b) Prozentuale Reduzierung der koloniebildenden Einheiten pro cm² nach einmaliger Behandlung mit Anwendungslösung 2.3**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 96,4 | 99,7 | 98,9 | 97,9 | 94,5 |
| B | 95,3 | 98,9 | 97,9 | 95,3 | 89,9 |
| G | 97,2 | 99,0 | 98,9 | 93,5 | 93,3 |
| **gesamt** | **96,3** | **99,2** | **98,5** | **95,6** | **92,6** |

**Tabelle 13a) Anwendungslösung 2.4**

| **Probe** | **KBE / cm2** | | | | | |
|---|---|---|---|---|---|---|
| | **vorher** | **10 min** | **60 min** | **12 Std.** | **72 Std.** | **6 Tage** |
| R25 | >350 | <3,5 | 0 | <3,5 | <3,5 | 3,5-17 |
| R26 | >350 | <3,5 | 0 | 0 | 3,5-17 | 3,5-17 |
| R27 | >350 | 3,5-17 | <3,5 | 0 | 3,5-17 | 17 |
| | **350** | **4,6** | **0,6** | **0,6** | **7,4** | **12,5** |
| B25 | >350 | 0 | 0 | 0 | <3,5 | <3,5 |
| B26 | >350 | <3,5 | 0 | 0 | 0 | <3,5 |
| B27 | >350 | <3,5 | <3,5 | 0 | <3,5 | 3,5-17 |
| | **350** | **1,2** | **0,6** | **0** | **1,2** | **4,6** |
| G25 | >350 | 0 | 0 | 0 | 17-58 | 58-140 |
| G26 | >350 | <3,5 | 0 | <3,5 | 3,5-17 | 17 |
| G27 | >350 | <3,5 | 0 | 0 | <3,5 | <3,5 |
| | **350** | **1,2** | **0** | **0,6** | **16,5** | **39,3** |
| **gesamt** | **350** | **2,3** | **0,4** | **0,4** | **8,4** | **18,8** |

**Tabelle 13b) Prozentuale Reduzierung der koloniebildenden Einheiten pro cm² nach einmaliger Behandlung mit Anwendungslösung 2.4**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 98,7 | 99,8 | 99,8 | 97,9 | 96,4 |
| B | 99,7 | 99,8 | 100,0 | 99,7 | 98,7 |
| G | 99,7 | 100,0 | 99,8 | 95,3 | 88,8 |
| **gesamt** | **99,3** | **99,9** | **99,9** | **97,6** | **94,6** |

**Tabelle 14a) Anwendungslösung 2.5**

| **Probe** | **KBE / cm2** | | | | | |
|---|---|---|---|---|---|---|
| | **vorher** | **10 min** | **60 min** | **12 Std.** | **72 Std.** | **6 Tage** |
| R28 | >350 | <3,5 | 0 | 0 | 0 | 0 |
| R29 | >350 | <3,5 | 0 | 0 | <3,5 | <3,5 |
| R30 | >350 | <3,5 | 0 | 0 | <3,5 | 3,5-17 |
| | **350** | **1,8** | **0** | **0** | **1,2** | **4** |
| B28 | >350 | <3,5 | 0 | 0 | 0 | 0 |
| B29 | >350 | <3,5 | 0 | 0 | 3,5-17 | 3,5-17 |
| B30 | >350 | 0 | 0 | 0 | 0 | 0 |
| | **350** | **1,2** | **0** | 0 | **3,4** | **3,4** |
| G28 | >350 | 0 | 0 | 0 | 0 | <3,5 |
| G29 | >350 | 3,5-17 | <3,5 | 0 | 0 | <3,5 |
| G30 | >350 | <3,5 | <3,5 | 3,5-17 | 17 | 17-58 |
| | **350** | **4** | **1,2** | **3,4** | **5,7** | **13,7** |
| **gesamt** | **350** | **2,3** | **0,4** | **1,1** | **3,4** | **7,0** |

**Tabelle 14b) Prozentuale Reduzierung der koloniebildenden Einheiten pro cm² nach einmaliger Behandlung mit Anwendungslösung 2.5**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 99,5 | 100,0 | 100,0 | 99,7 | 98,9 |
| B | 99,7 | 100,0 | 100,0 | 99,0 | 99,0 |
| G | 98,9 | 99,7 | 99,0 | 98,4 | 96,1 |
| **gesamt** | **99,3** | **99,9** | **99,7** | **99,0** | **98,0** |

**Tabelle 15a) Wasser**

| **Probe** | **KBE / cm2** | | | | | |
|---|---|---|---|---|---|---|
| | **vorher** | **10 min** | **60 min** | **12 Std.** | **72 Std.** | **6 Tage** |
| R31 | >350 | 58-140 | 140 | 140-350 | >350 | >350 |
| R32 | >350 | 58-140 | 140 | 140-350 | >350 | >350 |
| R33 | >350 | 58-140 | 140 | 140-350 | >350 | >350 |
| | **350** | **99** | **140** | **245** | **350** | **350** |
| B31 | >350 | 58-140 | 140 | 140-350 | >350 | >350 |
| B32 | >350 | 58-140 | 140 | >350 | >350 | >350 |
| B33 | >350 | 140 | 140 | 140-350 | >350 | >350 |
| | **350** | **112,7** | **140** | **280** | **350** | **350** |
| G31 | >350 | 140 | 140 | 140-350 | >350 | >350 |
| G32 | >350 | 140 | 140 | 140-350 | >350 | >350 |
| G33 | >350 | 140-350 | 140-350 | >350 | >350 | >350 |
| | **350** | **175** | **175** | **280** | **350** | **350** |
| **gesamt** | **350** | **128,9** | **151,7** | **268,3** | **350,0** | **350,0** |

**Tabelle 15b) Prozentuale Reduzierung der koloniebildenden Einheiten pro cm² nach einmaliger Behandlung mit Wasser**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 71,7 | 60,0 | 30,0 | 0,0 | 0,0 |
| B | 67,8 | 60,0 | 20,0 | 0,0 | 0,0 |
| G | 50,0 | 50,0 | 20,0 | 0,0 | 0,0 |
| **gesamt** | **63,2** | **56,7** | **23,3** | **0,0** | **0,0** |

**Tabelle 16a) ohne Reinigung**

| **Probe** | **KBE / cm2** | | | | | |
|---|---|---|---|---|---|---|
| | **vorher** | **10 min** | **60 min** | **12 Std.** | **72 Std.** | **6 Tage** |
| R34 | >350 | >350 | >350 | >350 | >350 | >350 |
| R35 | >350 | >350 | >350 | >350 | >350 | >350 |
| R36 | >350 | >350 | >350 | >350 | >350 | >350 |
| | **350** | **350** | **350** | **350** | **350** | **350** |
| B34 | >350 | >350 | >350 | >350 | >350 | >350 |
| B35 | >350 | >350 | >350 | >350 | >350 | >350 |
| B36 | >350 | >350 | >350 | >350 | >350 | >350 |
| | **350** | **350** | **350** | **350** | **350** | **350** |
| G34 | >350 | >350 | >350 | >350 | >350 | >350 |
| G35 | >350 | >350 | >350 | >350 | >350 | >350 |
| G36 | >350 | >350 | >350 | >350 | >350 | >350 |
| | **350** | **350** | **350** | **350** | **350** | **350** |
| **gesamt** | **350** | **350,0** | **350,0** | **350,0** | **350,0** | **350,0** |

**Tabelle 16b) Prozentuale Reduzierung der koloniebildenden Einheiten pro cm² ohne Reinigung**

| **Probe** | **Prozentuale Reduzierung der Bakterienzahl** | | | | |
|---|---|---|---|---|---|
| | **10 min** | **60 min** | **12 Std.** | **72 Std.** | **6 Tage** |
| R | 0,0 | 0,0 | 0,0 | 0,0 | 0,0 |
| B | 0,0 | 0,0 | 0,0 | 0,0 | 0,0 |
| G | 0,0 | 0,0 | 0,0 | 0,0 | 0,0 |
| **gesamt** | **0,0** | **0,0** | **0,0** | **0,0** | **0,0** |

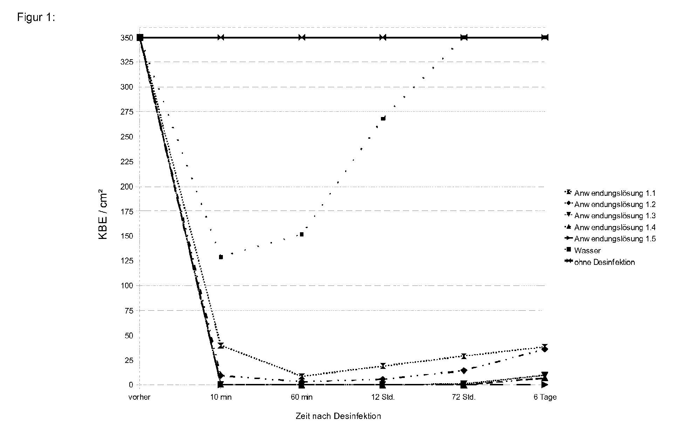

Die Wirksamkeit der Anwendungslösungen 1.1 bis 1.5 im Vergleich mit Wasser und der Kontrollgruppe ohne Reinigung sind in Figur 1 dargestellt.

Die Abnahme der mittels Abklatschtest nachweisbaren KBE/cm² zeigt, dass eine einmalige Reinigung mit Wasser eine signifikante Reduzierung der Anzahl der oberflächlich auf den behandelten Eiern anhaftenden Bakterien bewirkt. Allerdings werden die verbleibenden Bakterien nicht signifikant in ihrer Lebensfähigkeit beeinflusst, da bereits nach 60 Minuten nach der Reinigung ein Anstieg der KBE/cm² mittels Abklatschtest nachweisbar war.

Bei einmaliger Verwendung der Anwendungslösungen 1.1 bis 1.5 war im Vergleich zur Verwendung von Wasser eine stärker Abnahme der KBE/cm² mittels Abklatschtest nachweisbar.

Darüber hinaus wird bereits durch die Verwendung der Anwendungslösung 1.1 die Wiederverkeimung der behandelten Oberfläche signifikant reduziert.

Bei Verwendung der Anwendungslösung 1.5 ließ sich auch 6 Tage nach der einmaligen Anwendung nur eine sehr geringe Wiederverkeimung der behandelten Oberfläche mittels Abklatschtest der behandelten Ei-Oberfläche nachweisen.

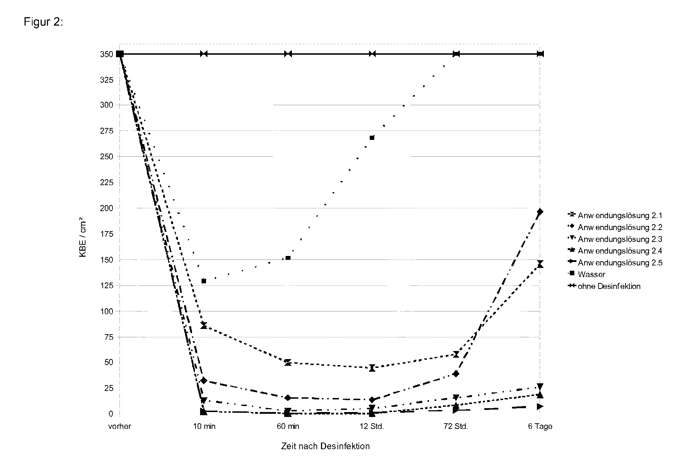

Die Wirksamkeit der Anwendungslösungen 2.1 bis 2.5 im Vergleich mit Wasser und der Kontrollgruppe ohne Reinigung sind in Figur 2 dargestellt.

Bei einmaliger Verwendung der Anwendungslösungen 2.1 bis 2.5 war im Vergleich zur Verwendung von Wasser eine stärkere Abnahme der KBE/cm² mittels Abklatschtest nachweisbar.

Bei einmaliger Verwendung der Anwendungslösungen 2.1 und 2.2 konnte mittels Abklatschtest die Wiederverkeimung der behandelten Oberfläche nachgewiesen werden.

Bei einmaliger Verwendung der Anwendungslösungen 2.3, 2.4 und 2.5 konnte mittels Abklatschtest eine signifikante Reduzierung der Wiederverkeimung der behandelten Oberfläche nachgewiesen werden.

Wie der Tabelle 3 entnommen werden kann, enthalten die Anwendungslösungen 2.3, 2.4 und 2.5 0,135 Gew.-% PCG 1200 und 0,03 Gew-% Pentonium DO 50, bzw. 0,27 Gew.-% PCG 1200 und 0,06 Gew.% Pentonium DO 50 bzw. 0,405 Gew.-% PCG 1200 und 0,09 Gew.% Pentonium DO 50. Die verwendeten Detergentien PCG 1200 und Pentonium DO 50 enthalten als Lösungsmittel eine Mischung aus Glycolether und Glycol bzw. Ethanol.

Die in den Detergentien PCG 1200 und Pentonium DO 50 enthaltene Menge an Glycolether und Glycol bzw. Ethanol bewirkt bereits eine signifikante Reduzierung der Wiederverkeimung der behandelten Oberfläche, die vergleichbar mit der Wirkung nach einmaliger Anwendung der Anwendungslösungen 1.1 und 1.2 ist.

### Beispiel 5: Ermittlung des Wirkungsspektrum des in Beispiel 1 verwendeten Konzentrates 1

Um das Wirkungsspektrum des in Beispiel 1 verwendeten Konzentrates zu ermitteln, wurden verschiedene Testkeime, die im Veterinärbereich vorkommen, Verdünnungen des in Tabelle 1 dargestellten Konzentrates 1 ausgesetzt.

Die Versuche wurden gemäß DIN/EN 14349 (2010) ("Quantitativer Oberflächentest zur Bestimmung der bakteriziden Wirkung chemischer Desinfektionsmittel und Antiseptika für den Veterinärbereich auf nicht-porösen Oberflächen ohne mechanische Wirkung") durchgeführt.

Als Testkörper wurden Plättchen aus rostfreiem Stahl verwendet, die eine Testoberfläche mit einem Durchmesser von 2 cm aufwiesen.

Da stark verschmutzte Eier nicht für die Brut verwendet werden, wurden die Untersuchungen gemäß DIN/EN 14349 (2010) mit geringer organischer Belastung durchgeführt, wobei als Belastungssubstanz Serumalbumin in einer Konzentration von 3,0 g/l verwendet wurde.

2 Minuten vor Testbeginn wurde die jeweils verwendete Testsuspension durch Mischen von jeweils 1 ml der in Tabelle 17 angegebenen Bakteriensuspension mit 1 ml einer wässrigen Lösung der Belastungssubstanz hergestellt.

**Tabelle 17: Verwendete Bakteriensuspensionen.**

| Bakterienstamm | ATCC Nummer | Anzahl der KBE per 0,025 ml Bakteriensuspension |
|---|---|---|
| Staphylococcus aureus | ATCC 6538 | 7,92 x 10⁷ |
| Enterococcus hirae | ATCC 10541 | 1,02 x 10⁸ |
| Pseudomonas aeruginosa | ATCC 15442 | 1,10x10⁸ |
| Proteus hauseri | ATCC 13315 | 5,45 x 10⁷ |

Die horizontal angeordneten Testflächen wurden in offenen Petrischalen mit 0,05 ml der jeweils verwendeten Testsuspension inokuliert und nachfolgend in einem Inkubator bei 37°C für 45 Minuten getrocknet.

Die getrockneten Testflächen wurden anschließend mit 0,1 ml der jeweils verwendeten Testlösung bedeckt.

Aus dem Konzentrat 1, das die in Tabelle 1 aufgeführte Zusammensetzung aufwies, wurden durch serielle Verdünnung mit Wasser die in Tabelle 18 aufgeführten Anwendungslösungen 1.5 bis 1.7 hergestellt.

Dabei wurde jeweils Wasser standardisierter Härte (Härte 300 ppm, berechnet auf Kalziumkarbonat) verwendet. Für die Wasserkontrolle wurde stattdessen Wasser standardisierter Härte verwendet.

**Tabelle 18: Zusammensetzung der verwendeten Anwendungslösungen 1.5 bis 1.7**

| | **Konzentration (Gew.-%)** | | | |
|---|---|---|---|---|
| **Inhaltsstoff** | **Konzentrat** 1 | **30,00 %** | **15,00 %** | **60,00 %** |
| Wasserstoffperoxid | 7,5 | 2,25 | 1,125 | 4,5 |
| Ethanol (vergällt) | 9,0 | 2,7 | 1,35 | 5,4 |
| Essigsäure | 2,7 | 0,81 | 0,405 | 1,62 |
| Isopropanol | 9,0 | 2,7 | 1,35 | 5,4 |
| PCG 1200 ¹⁾ | 1,35 | 0,405 | 0,2025 | 0,81 |
| Pentonium DO 50 ²⁾ | 0,3 | 0,09 | 0,045 | 0,18 |
| Duft (Kiwi Mix) (optional) | 0,06 | 0,018 | 0,009 | 0,036 |
| **Anwendungslösung:** | **-** | **1.5** | **1.6** | **1.7** |

| | | | | |
|---|---|---|---|---|
| ¹⁾ PCG 1200: quartäre Ammoniumverbindung 20-40 % Glycolether (Lösungsmittel) 20-40 % Glycol (Lösungsmittel)20-40 % ²⁾ Pentonium DO 50:Dioctyldimethylammoniumchlorid 50 % Ethanol (Lösungsmittel) | | | | |

Ein geeignetes Verfahren zur Herstellung von Wasser standardisierter Härte ist beispielsweise in Anhang 3 der "Leitlinie der Deutschen Vereinigung zur Bekämpfung der Viruskrankheiten (DVV) e.V. und des Robert Koch-Instituts (RKI) zur Prüfung von chemischen Desinfektionsmitteln auf Wirksamkeit gegen Viren in der Humanmedizin" in der Fassung vom 15. Juni 2005 beschrieben.

Nach der jeweiligen Einwirkzeit wurden die Testkörper in separate Gefäße überführt, die 10 ml einer wässrigen Neutralisierungslösung der folgenden Zusammensetzung enthielten:

| | |
|---|---|
| 3,0 Gew.-% | Tween 80 |
| 0,3 Gew.-% | Lecithin |
| 0,1 Gew.-% | Histidin |
| 0,5 Gew.-% | Natrium Thiosulfat |

und 5 Minuten in der Neutralisierungslösung belassen.

Anschließend wurden serielle Verdünnungen mit Trypton-NaCl-Medium, das 10 g/l Trypton und 10 g/l NaCl enthielt, hergestellt und jeweils 1 ml zur Bestimmung der Anzahl der überlebenden Bakterien auf Trypton-Soja-Agar (TSA)-Platten ausgestrichen und bei 37°C inkubiert.

Die Zusammensetzung des verwendeten Trypton-Soja-Agars ist nachfolgend aufgeführt:

| | |
|---|---|
| Casein, tryptisch verdaut | 15,0 g/l |
| Sojapepton | 5,0 g/l |
| Natriumchlorid | 5,0 g/l |
| Agar | 15,0 g/l |
| pH-Wert | 7,2 ± 0,1 |

Die Bestimmung der Keimzahl erfolgte nach 48 Stunden durch Auszählung.

Die Ergebnisse sind in den Tabellen 19 bis 22 dargestellt.

**Tabelle 19: Wirkung gegenüber Staphylococcus aureus**

| |
|---|
| Prüftemperatur: 10°C |
| Anzahl der Platten: 2 |
| Trocknungszeit auf Keimträger 45 min. |

**Tabelle 19a) Validierung und Kontrolle**

| Kontrolle der Prüfsuspension | | Nicht-Toxizität des Neutralisationsmittels | | Methodenval idierung | |
|---|---|---|---|---|---|
| N | 7,92 x 10⁷ | B | 8,8 x 10⁷ | C | 8,1 x 10⁷ |
| Lg N | 7,90 | Lg B | 7,94 | Lg C | 7,91 |

| | | | | | |
|---|---|---|---|---|---|
| Legende: N ist die Anzahl der KBE per 0,025 ml Prüfsuspension B ist die Anzahl von KBE je Prüfoberfläche der Kontrolle der Nicht-Toxizität des Neutralisationsmittels. C ist die Anzahl von KBE je Prüfoberfläche der Methodenvalidierung KBE koloniebildende Einheiten | | | | | |

**Tabelle 19b) Wirkung des in Beispiel 1 verwendeten Konzentrates in der jeweils angegebenen Konzentration.**

| Einwirkzeit | Wasserkontrolle | | Desinfektion mit Anwendungslösung | | | |
|---|---|---|---|---|---|---|
| | | | | **1.7** | **1.5** | **1.6** |
| 5 min | Nw | 2,30 x 10⁷ | Na | <140 | <140 | <140 |
| | Lg Nw | 7,36 | Lg Na | <2,15 | <2,15 | <2,15 |
| | | | Nts | 0 | 0 | 0 |
| | | | R | **>4,0** | **>4,0** | **>4,0** |
| | | | | | | |
| 30 min | Nw | 1,84 x 10⁷ | Na | <140 | <140 | <140 |
| | Lg Nw | 7,26 | Lg Na | <2,15 | <2,15 | <2,15 |
| | | | Nts | 0 | 0 | 0 |
| | | | Lg R | **>4,0** | **>4,0** | **>4,0** |
| pH-Werte | | | | 3,36 | 3,58 | 3,81 |

| | | | | | | |
|---|---|---|---|---|---|---|
| Legende: Nw ist die Anzahl von KBE je Prüfoberfläche der Wasserkontrolle Na ist die Anzahl von KBE je Prüfoberfläche am Ende der Einwirkzeit vor der Neutralisation. Nts ist die Anzahl der KBE pro rückgewonnener Prüfoberfläche Lg R ist der Log₁₀-Reduktionsfaktor, der als Differenz aus (Lg Nw - Lg Na) berechnet wird. KBE koloniebildende Einheiten | | | | | | |

**Tabelle 20: Wirkung gegenüber Enterococcus hirae**

| |
|---|
| Prüftemperatur: 10°C |
| Anzahl der Platten: 2 |
| Trocknungszeit auf Keimträger 45 min. |

**Tabelle 20a: Validierung und Kontrolle**

| Kontrolle der Prüfsuspension | | Nicht-Toxizität des Neutralisationsmittels | | Methodenval idierung | |
|---|---|---|---|---|---|
| N | 1,02 x 10⁸ | B | 1,53 x 10⁸ | C | 1,54 x 10⁸ |
| Lg N | 8,01 | Lg B | 8,18 | Lg C | 8,19 |

| | | | | | |
|---|---|---|---|---|---|
| Legende: N ist die Anzahl der KBE per 0,025 ml Prüfsuspension B ist die Anzahl von KBE je Prüfoberfläche der Kontrolle der Nicht-Toxizität des Neutralisationsmittels. C ist die Anzahl von KBE je Prüfoberfläche der Methodenvalidierung KBE koloniebildende Einheiten | | | | | |

**Tabelle 20b) Wirkung des in Beispiel 1 verwendeten Konzentrates in der jeweils angegebenen Konzentration.**

| Einwirkzeit | Wasserkontrolle | | Desinfektion mit Anwendungslösung | | | |
|---|---|---|---|---|---|---|
| | | | | **1.7** | **1.5** | **1.6** |
| 5 min | Nw | 2,07 x 10⁷ | Na | <140 | <140 | <140 |
| | Lg Nw | 7,32 | Lg Na | <2,15 | <2,15 | <2,15 |
| | | | Nts | 0 | 0 | 0 |
| | | | R | **>4,0** | **>4,0** | **>4,0** |
| | | | | | | |
| 30 min | Nw | 2,32 x 10⁷ | Na | <140 | <140 | <140 |
| | Lg Nw | 7,36 | Lg Na | <2,15 | <2,15 | <2,15 |
| | | | Nts | 0 | 0 | 0 |
| | | | Lg R | **>4,0** | **>4,0** | **>4,0** |
| pH-Werte | | | | 3,36 | 3,58 | 3,81 |

| | | | | | | |
|---|---|---|---|---|---|---|
| Legende: Nw ist die Anzahl von KBE je Prüfoberfläche der Wasserkontrolle Na ist die Anzahl von KBE je Prüfoberfläche am Ende der Einwirkzeit vor der Neutralisation. Nts ist die Anzahl der KBE pro rückgewonnener Prüfoberfläche Lg R ist der Log₁₀-Reduktionsfaktor, der als Differenz aus (Lg Nw - Lg Na) berechnet wird. KBE koloniebildende Einheiten | | | | | | |

**Tabelle 21: Wirkung gegenüber Pseudomonas aeruginosa**

| |
|---|
| Prüftemperatur: 10°C |
| Anzahl der Platten: 2 |
| Trocknungszeit auf Keimträger 45 min. |

**Tabelle 21a). Validierung und Kontrolle**

| Kontrolle der Prüfsuspension | | Nicht-Toxizität des Neutralisationsmittels | | Methodenval idierung | |
|---|---|---|---|---|---|
| N | 1,10 x 10⁸ | B | 8,55 x 10⁶ | C | 1,02 x 10⁷ |
| Lg N | 8,04 | Lg B | 6,93 | Lg C | 7,01 |

| | | | | | |
|---|---|---|---|---|---|
| Legende: N ist die Anzahl der KBE per 0,025 ml Prüfsuspension B ist die Anzahl von KBE je Prüfoberfläche der Kontrolle der Nicht-Toxizität des Neutralisationsmittels. C ist die Anzahl von KBE je Prüfoberfläche der Methodenvalidierung KBE koloniebildende Einheiten | | | | | |

**Tabelle 21 b) Wirkung des in Beispiel 1 verwendeten Konzentrates in der jeweils angegebenen Konzentration.**

| Einwirkzeit | Wasserkontrolle | | Desinfektion mit Anwendungslösung | | | |
|---|---|---|---|---|---|---|
| | | | | **1.7** | **1.5** | **1.6** |
| 5 min | Nw | 6,75 x 10⁶ | Na | <140 | <140 | <140 |
| | Lg Nw | 6,83 | Lg Na | <2,15 | <2,15 | <2,15 |
| | | | Nts | 0 | 0 | 0 |
| | | | R | **>4,0** | **>4,0** | **>4,0** |
| | | | | | | |
| 30 min | Nw | 5,75 x 10⁶ | Na | <140 | <140 | <140 |
| | Lg Nw | 6,76 | Lg Na | <2,15 | <2,15 | <2,15 |
| | | | Nts | 0 | 0 | 0 |
| | | | Lg R | **>4,0** | **>4,0** | **>4,0** |
| pH-Werte | | | | 3,36 | 3,58 | 3,81 |

| | | | | | | |
|---|---|---|---|---|---|---|
| Legende: Nw ist die Anzahl von KBE je Prüfoberfläche der Wasserkontrolle Na ist die Anzahl von KBE je Prüfoberfläche am Ende der Einwirkzeit vor der Neutralisation. Nts ist die Anzahl der KBE pro rückgewonnener Prüfoberfläche Lg R ist der Log₁₀-Reduktionsfaktor, der als Differenz aus (Lg Nw - Lg Na) berechnet wird. KBE koloniebildende Einheiten | | | | | | |

**Tabelle 22: Wirkung gegenüber Proteus hauseri**

| |
|---|
| Prüftemperatur: 10°C |
| Anzahl der Platten: 2 |
| Trocknungszeit auf Keimträger 45 min. |

**Tabelle 22a) Validierung und Kontrolle**

| Kontrolle der Prüfsuspension | | Nicht-Toxizität des Neutralisationsmittels | | Methodenval idierung | |
|---|---|---|---|---|---|
| N | 5,45 x 10⁷ | B | 1,39 x 10⁷ | C | 3,24 x 10⁷ |
| Lg N | 7,74 | Lg B | 7,14 | Lg C | 7,51 |

| | | | | | |
|---|---|---|---|---|---|
| Legende: N ist die Anzahl der KBE per 0,025 ml Prüfsuspension B ist die Anzahl von KBE je Prüfoberfläche der Kontrolle der Nicht-Toxizität des Neutralisationsmittels. C ist die Anzahl von KBE je Prüfoberfläche der Methodenvalidierung KBE koloniebildende Einheiten | | | | | |

**Tabelle 22b) Wirkung des in Beispiel 1 verwendeten Konzentrates in der jeweils angegebenen Konzentration.**

| Einwirkzeit | Wasserkontrolle | | Desinfektion mit Anwendungslösung | | | |
|---|---|---|---|---|---|---|
| | | | | **1.7** | **1.5** | **1.6** |
| 5 min | Nw | 1,65 x 10⁷ | Na | <140 | <140 | <140 |
| | Lg Nw | 7,22 | Lg Na | <2,15 | <2,15 | <2,15 |
| | | | Nts | 0 | 0 | 0 |
| | | | R | **>4,0** | **>4,0** | **>4,0** |
| | | | | | | |
| 30 min | Nw | 1,60 x 10⁷ | Na | <140 | <140 | <140 |
| | Lg Nw | 7,20 | Lg Na | <2,15 | <2,15 | <2,15 |
| | | | Nts | 0 | 0 | 0 |
| | | | Lg R | **>4,0** | **>4,0** | **>4,0** |
| pH-Werte | | | | 3,36 | 3,58 | 3,81 |

| | | | | | | |
|---|---|---|---|---|---|---|
| Legende: Nw ist die Anzahl von KBE je Prüfoberfläche der Wasserkontrolle Na ist die Anzahl von KBE je Prüfoberfläche am Ende der Einwirkzeit vor der Neutralisation. Nts ist die Anzahl der KBE pro rückgewonnener Prüfoberfläche Lg R ist der Log₁₀-Reduktionsfaktor, der als Differenz aus (Lg Nw - Lg Na) berechnet wird. KBE koloniebildende Einheiten | | | | | | |

Wie den Tabellen 19 bis 22 entnommen werden kann, weisen die Anwendungslösungen 1.5 bis 1.7 eine bakterizide Wirkung gegenüber den in Tabelle 17 angegebenen Bakterienstämmen auf.

Die Abnahme der mittels Abklatschtest nachweisbaren KBE liegt dabei jeweils bei mehr als 4 Zehnerpotenzen, bezogen auf die Ausgangsmenge dieser

Mikroorganismen (Wasserkontrolle), was einen log₁₀-Reduktionsfaktor (Lg R) von mehr als 4 log₁₀ entspricht.

### Beispiel 6:

Um die desinfizierende Wirkung des in Beispiel 1 verwendeten Konzentrates 1 mit bekannten Desinfektionsmitteln, die bei der Behandlung von Eiern verwendet werden, zu vergleichen, wurde eine Oberflächendesinfektion an Edelstahlplatten durchgeführt.

Die Edelstahlplatten mit einer Prüfoberfläche von 40 cm x 20 cm wurden zunächst für 48 h bei 25°C der Raumluft ausgesetzt.

Nachfolgend wurden jeweils zwei Edelstahlplatten mit dem in Tabelle 1 angegebenen Konzentrat 1 sowie mit der in Tabelle 18 angegebenen Anwendungslösung 1.5 besprüht, so dass die Edelstahlplatten gleichmäßig und durchgehend befeuchtet waren.

Anschließend wurden die behandelten Edelstahlplatten getrocknet und in separaten Inkubatoren bei 37,5°C und 55 % relativer Luftfeuchtigkeit bebrütet.

Für die Wasserkontrolle wurde Wasser standardisierter Härte ohne Zusätze verwendet.

Als Vergleichslösungen wurden darüber hinaus die unten angegebenen Desinfektionslösungen 3 und 4 verwendet.

| | Desinfektionslösung 3 | Desinfektionslösung 4 |
|---|---|---|
| Wasserstoffperoxid | 2,0 Gew.-% | 5,0 Gew.-% |
| Peressigsäure | 0,01 Gew.-% | - |
| HOESCH Betain 40 | 0,30 Gew.-% | - |
| Wasser | ad 1000 g | ad 1000 g |

Das kommerziell erhältliche amphotere Tensid HOESCH Betain 40 wurde von der Firma Julius Hoesch GmbH & Co. KG (Düren, DE) bezogen und enthält Kokosfettsäureamidopropylbetain und Cocoamidopropylbetain.

Als Kontrolle wurden weiterhin unbehandelte Edelstahlplatten mitgeführt, die ohne Desinfektion in einen Inkubator überführt und ebenfalls bei 37,5°C und 55 % relativer Luftfeuchtigkeit inkubiert wurden.

Es wurden jeweils vor der Behandlung mit den oben angegebenen Anwendungslösungen sowie mit reinem Wasser und jeweils zu verschiedenen Zeitpunkten (5 Minuten, 30 Minuten, 4 Stunden, 12 Stunden, 3 Tagen und 6 Tagen) nach der Reinigung Abklatschtests durchgeführt. Die Durchführung der Abklatschtests wurde wie oben beschrieben jeweils mit einem Envirocheck® Nährbodenträger durchgeführt.

Die Ergebnisse der Abklatschtests sind in Tabelle 23 dargestellt.

**Tabelle 23: Ergebnisse der Oberflächendesinfektion an Edelstahlplatten**

| | KBE / cm² | | | | | | |
|---|---|---|---|---|---|---|---|
| Formulierung | vorher | 5 min | 30 min | 4 Std. | 12 Std. | 3 Tagen | 6 Tagen |
| Ohne Desinfektion | 140-350 | 140-350 | 140-350 | 140-350 | 140-350 | 140-350 | 140-350 |
| Wasserkontrolle | 140-350 | 58 | 58-140 | 58-140 | 140-350 | 140-350 | 140-350 |
| Konzentrat 1 | 140-350 | 0 | 0 | 0 | 0 | 0 | 0 |
| Anwendungslösung 1.5 | 140-350 | 0 | 0 | 0 | 0 | 0 | 0 |
| Desinfektionslösung 3 | 140-350 | <3,5 | 0 | 0 | <3,5 | 17-58 | 58 |
| Desinfektionslösung 4 | 140-350 | <3,5 | 0 | 0 | <3,5 | 58-140 | 140-350 |

Die Abnahme der mittels Abklatschtest nachweisbaren KBE/cm² zeigt, dass eine einmalige Reinigung mit Wasser eine signifikante Reduzierung der Anzahl der oberflächlich auf den behandelten Edelstahlplatten anhaftenden Bakterien bewirkt. Allerdings werden die verbleibenden Bakterien nicht signifikant in ihrer Lebensfähigkeit beeinflusst, da bereits nach 30 Minuten nach der Reinigung ein Anstieg der KBE/cm² mittels Abklatschtest nachweisbar war.

Bei einmaliger Verwendung des in Tabelle 1 angegebenen Konzentrats 1 sowie der Anwendungslösung 1.5 war im Vergleich zur Verwendung von Wasser eine stärkere Abnahme der KBE/cm² mittels Abklatschtest nachweisbar.

Darüber hinaus wird bereits durch die Verwendung der Anwendungslösung 1.5 die Wiederverkeimung der behandelten Oberfläche signifikant reduziert.

Es ließ sich sowohl bei einmaliger Anwendung des in Tabelle 1 angegebenen Konzentrats 1 als auch bei einmaliger Anwendung der Anwendungslösung 1.5 auch 6 Tage nach der Anwendung keine Wiederverkeimung der behandelten Oberfläche der Edelstahlplatte mittels Abklatschtest nachweisen.

Bei einmaliger Anwendung der Desinfektionslösungen 3 und 4 war im Vergleich zur Verwendung von Wasser eine stärkere Abnahme der KBE/cm² mittels Abklatschtest nachweisbar. Allerdings konnte bereits 12 Stunden nach der einmaligen Anwendung eine Wiederverkeimung der behandelten Oberfläche nachgewiesen werden.

## Patentansprüche

1. Verwendung einer Zusammensetzung zur Reinigung, insbesondere zur Desinfektion und/oder Keimreduzierung, von Eiern und/oder Vorrichtungen zur Lagerung, Brut und/oder zum Transport von Eiern, wobei die Zusammensetzung:
a) Wasser
b) mindestens ein organisches Lösungsmittel, ausgewählt aus aliphatischem Alkohol und/oder aliphatischem Ether,
c) mindestens ein Tensid und
d1) eine Mischung mindestens einer Peroxidverbindung und mindestens einer Carbonsäure mit 2 bis 6 Kohlenstoffatomen und/oder
d2) mindestens eine Peroxycarbonsäure mit 2 bis 6 Kohlenstoffatomen umfasst.

2. Verwendung nach Anspruch 1, wobei die Peroxidverbindung eine flüchtige Peroxidverbindung ist.

3. Verwendung nach einem der vorhergehenden Ansprüche, wobei das mindestens eine organische Lösungsmittel ein aliphatischer, linearer und/oder verzweigter Alkohol mit 1 bis 4 Kohlenstoffatomen, vorzugsweise mit 2 oder 3 Kohlenstoffatomen, ist.

4. Verwendung nach Anspruch 3, wobei das organische Lösungsmittel aus der Gruppe, die aus Ethanol, 1-Propanol, 2-Propanol und Mischungen davon besteht, ausgewählt ist.

5. Verwendung nach einem der vorhergehenden Ansprüche, wobei die mindestens eine Peroxycarbonsäure mit 2 bis 6 Kohlenstoffatomen aus der Gruppe, die Peroxyessigsäure, Peroxybrenztraubensäure, Peroxymilchsäure, Peroxypropionsäure und Mischungen davon besteht, ausgewählt ist.

6. Verwendung nach einem der vorhergehenden Ansprüche, wobei die mindestens eine Carbonsäure mit 2 bis 6 Kohlenstoffatomen aus der Gruppe, die aus gesättigten Monocarbonsäuren mit 2 bis 6 Kohlenstoffatomen, gesättigten Dicarbonsäuren mit 2 bis 6 Kohlenstoffatomen, Salzen davon, Derivaten davon und Mischungen davon besteht, ausgewählt ist, wobei die Carbonsäuren jeweils unsubstituiert oder mit Hydroxyl-Gruppen substituiert sein können.

7. Verwendung nach Anspruch 6, wobei die mindestens eine Carbonsäure mit 2 bis 6 Kohlenstoffatomen eine flüchtige Carbonsäure ist und vorzugsweise aus der Gruppe, die aus Essigsäure, Propionsäure, Glycolsäure, Milchsäure und Mischungen davon besteht, ausgewählt ist.

8. Verwendung nach einem der vorhergehenden Ansprüche, wobei das mindestens eine Tensid ein kationisches Tensid ist.

9. Verwendung nach Anspruch 8, wobei das kationische Tensid eine quartäre Ammoniumverbindung der allgemeinen Formel (1): 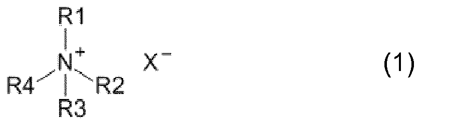 ist, wobei R1, R2, R3 und R4 jeweils unabhängig voneinander aus der Gruppe, die aus Alkylresten mit 1 bis 20 Kohlenstoffatomen, C1 - C4 Hydroxyalkyl, die mit Fettsäuren mit 10 bis 20 Kohlenstoffatomen verestert sein können, und Alkylarylresten mit 7 bis 20 Kohlenstoffatomen besteht, ausgewählt ist und wobei X eine Säureanion ist, das vorzugsweise aus der Gruppe, die aus Halogenid, Sulfat und Alkylsulfat mit 1 bis 4 Kohlenstoffatomen besteht, ausgewählt ist.

10. Verwendung nach Anspruch 8 oder 9, wobei das kationische Tensid eine quartäre Ammoniumverbindung der allgemeinen Formel (1): 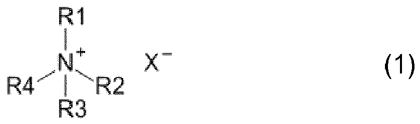 ist, wobei mindestens R1 und R2 jeweils Methylreste sind und mindestens R3 aus der Gruppe, die aus gradkettigen Alkylresten mit 8 bis 18 Kohlenstoffatomen und Alkylarylresten mit 7 bis 10 Kohlenstoffatomen besteht, ausgewählt ist und wobei X eine Säureanion ist, das vorzugsweise aus der Gruppe, die aus Halogenid, Sulfat und Alkylsulfat mit 1 bis 4 Kohlenstoffatomen besteht, ausgewählt ist.

11. Verwendung nach einem der vorhergehenden Ansprüche, wobei die Peroxidverbindung in einer Konzentration von 0,001 bis 10 Gew.-%, bezogen auf das Gesamtgewicht der Zusammensetzung, enthalten ist.

12. Verwendung nach einem der vorhergehenden Ansprüche, wobei das organische Lösungsmittel in einer Konzentration von 0,01 bis 30 Gew.-%, bezogen auf das Gesamtgewicht der Zusammensetzung, enthalten ist.

13. Verwendung nach einem der vorhergehenden Ansprüche, wobei die mindestens eine Carbonsäure mit 2 bis 6 Kohlenstoffatomen in einer Konzentration von 0,00001 bis 5 Gew.-%, bezogen auf das Gesamtgewicht der Zusammensetzung, enthalten ist.

14. Verwendung nach einem der vorhergehenden Ansprüche zur Reinigung, insbesondere zur Desinfektion und/oder Keimreduzierung, von Eiern, vorzugsweise von Bruteiern.

15. Verfahren zur Reinigung, insbesondere zur Desinfektion und/oder Keimreduzierung, von Eiern und/oder Vorrichtungen zur Lagerung, Brut und/oder zum Transport von Eiern, wobei das Verfahren folgenden Schritt umfasst:
A) Aufbringen einer Zusammensetzung auf Eier und/oder Vorrichtungen zur Lagerung, Brut und/oder zum Transport von Eiern, wobei die Zusammensetzung
a) Wasser
b) mindestens ein organisches Lösungsmittel, ausgewählt aus aliphatischem Alkohol und/oder aliphatischem Ether,
c) mindestens ein Tensid und
d1) eine Mischung mindestens einer Peroxidverbindung und mindestens einer Carbonsäure mit 2 bis 6 Kohlenstoffatomen und/oder
d2) mindestens eine Peroxycarbonsäure mit 2 bis 6 Kohlenstoffatomen
umfasst.
